# EUROPÄISCHE PATENTANMELDUNG

(11) **EP 3 943 909 A1**
(43) Veröffentlichungstag der Anmeldung: **26.01.2022**
(21) Anmeldenummer: 21192282.8
(22) Anmeldetag: 13.04.2017
(51) Int. Cl.: G01M 11/02, G01N 21/958

(54) **VERFAHREN ZUR BEREITSTELLUNG EINES BRILLENGLAS-ROHLINGS BZW. EINES BRILLENGLAS-HALBFABRIKATS FÜR DIE HERSTELLUNG EINES BRILLENGLASES**

(62) Teilanmeldung aus: 17166517.7
(71) Anmelder: Carl Zeiss Vision International GmbH, 73430 Aalen (DE)
(72) Erfinder: Gromotka, Jeremias, 73433 Aalen (DE)
(74) Vertreter: Tautz, Raphael Gerhard

(57) **Zusammenfassung**

Die vorliegende Erfindung betrifft ein Verfahren zur Bereitstellung eines Brillenglas-Rohlings bzw. eines Brillenglas-Halbfabrikats für die Herstellung eines Brillenglases gemäß wenigstens eines Datensatzes von Formranddaten sowie ein Computerprogrammprodukt.

## Beschreibung

Die vorliegende Erfindung betrifft ein Verfahren zur Herstellung eines Brillenglases aus einem Brillenglas-Rohling, aus einem Brillenglas-Halbfabrikat oder aus einem Brillenglas-Fertigfabrikat nach dem Oberbegriff des Anspruchs 1.

Bei Brillengläsern unterscheidet man zwischen Brillengläsern ohne nominelle dioptrische Wirkung und Korrektions-Brillengläsern, also Brillengläsern mit dioptrischer Wirkung. Dioptrische Wirkung ist nach der DIN EN ISO 13666 der Sammelbegriff für die fokussierende und die prismatische Wirkung eines Brillenglases.

Bei Korrektions-Brillengläsern unterscheidet man weiterhin zwischen EinstärkenBrillengläsern und Mehrstärken-Brillengläsern. Ein Einstärken-Brillenglas ist ein Brillenglas, bei dem nur eine dioptrische Wirkung vorhanden ist. Ein Mehrstärken-Brillenglas ist ein Brillenglas, bei dem zwei oder mehr verschiedene Bereiche mit unterschiedlichen dioptrischen Wirkungen im Brillenglas vorhanden sind.

Welche Form das Brillenglas auf seiner Vorderfläche und/oder Rückfläche aufweisen muss, um die gewünschte optische Korrektur zu erhalten, wird maßgeblich von dem Werkstoff, aus welchem das Brillenglas gefertigt wird, bestimmt. Wichtigster Parameter ist hierbei der Brechungsindex des eingesetzten Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich.

Brillengläser basierend auf mineralischen Gläsern werden regelmäßig durch maschinelle mechanisch abrasive Bearbeitung eines Brillenglas-Rohlings erzeugt.

Brillengläser basierend auf organischen Materialien werden beispielsweise als Brillenglas-Halbfertigfabrikate mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in JP 2008191186 A beschrieben ist. Die Rückfläche eines so hergestellten Brillenglas-Halbfertigfabrikats kann beispielsweise maschinell mechanisch abrasiv unter Erhalt eines Brillenglas-Fertigfabrikats bearbeitet werden.

In der EP1116550A1 wird ein Verfahren zur Herstellung eines Brillenglases beschrieben, bei dem eine Produktinformationen umfassende Markierung in dem Bereich des Brillenglases angebracht wird, der bei der endgültigen Herstellung des Brillenglases weggeschnitten wird.

In der EP3002114A1 wird ein Verfahren beschrieben, bei dem die zu bearbeitende Position auf wenigstens zwei Oberflächen des Brillenglas-Rohlings nach Kriterien der kosteneffektivsten Herstellung gewählt wird.

Es ist die Aufgabe der vorliegenden Erfindung, ein Verfahren zur Bereitstellung eines Brillenglas-Rohlings bzw. eines Brillenglas-Halbfabrikats für die Herstellung eines Brillenglases bereitzustellen, welches die Verwertung von vormals als Ausschuss identifizierten Vorprodukten bzw. von vormals als Ausschuss identifizierten Zwischenprodukten zur Herstellung eines Brillenglases erlaubt.

Diese Aufgabe wird erfindungsgemäß gelöst durch Bereitstellung eines Verfahrens gemäß einem der unabhängigen Ansprüche. Vorteilhafte Ausgestaltungen dieses Verfahrens sind in den Unteransprüchen angegeben.

Weiterhin wird die Aufgabe gelöst durch Bereitstellung eines Computerprogrammprodukts gemäß dem entsprechenden unabhängigen Anspruch.

Danach wird die Aufgabe gelöst durch ein Verfahren zur Herstellung eines Brillenglases gemäß wenigstens eines Datensatzes von Formranddaten, wobei das Verfahren die folgenden Schritte umfasst:
a. Bereitstellen eines Brillenglas-Rohlings,
b. Identifikation wenigstens eines optional vorhandenen Defekts des Brillenglasrohlings,
c. optional Separation der in Schritt a. bereitgestellten Brillenglasrohlinge in Brillenglasrohlinge mit in Schritt b. identifiziertem wenigstens einen Defekt und Brillenglasrohlinge ohne in Schritt b. identifizierten Defekt,
d. Erfassen der Position und optional der Größe des in Schritt b. identifizierten wenigstens einen Defekts,
e. Bereitstellen wenigstens eines Datensatzes von Rezeptdaten,
f. Bereitstellen wenigstens eines Datensatzes von Formranddaten,
g. Vergleich des wenigstens einen Datensatzes von Rezeptdaten aus Schritt e. mit dem in Schritt b. identifizierten und dem in Schritt d. erfassten wenigstens einen Defekt des Brillenglas-Rohlings,
h. Vergleich des wenigstens einen Datensatzes von Formranddaten aus Schritt f. mit dem in Schritt b. identifizierten und dem in Schritt d. erfassten wenigstens einen Defekt des Brillenglasrohlings,
i. Zuordnung des Brillenglas-Rohlings in Abhängigkeit des Vergleichs aus Schritt g. und in Abhängigkeit des Vergleichs aus Schritt h. zu einer Kategorie,
   oder
j. Bereitstellen eines Brillenglas-Halbfabrikats, welches optional auf der optisch wirksamen Zielfläche beschichtet ist,
k. Identifikation wenigstens eines optional vorhandenen Defekts des Brillenglas-Halbfabrikats und/oder Identifikation wenigstens eines optional vorhandenen Defekts der optional vorhandenen Beschichtung der optisch wirksamen Zielfläche des Brillenglas-Halbfabrikats,
I. optional Separation der in Schritt j. bereitgestellten Brillenglas-Halbfabrikate in Brillenglas-Halbfabrikate mit in Schritt k. identifiziertem wenigstens einen Defekt und Brillenglas-Halbfabrikate ohne in Schritt k. identifizierten Defekt,
m. Erfassen der Position und optional der Größe des in Schritt k. identifizierten wenigstens einen Defekts,
n. Bereitstellen wenigstens eines Datensatzes von Formranddaten,
o. optional Bereitstellen wenigstens eines Datensatzes von Rezeptdaten,
p. Vergleich des wenigstens einen Datensatzes von Formranddaten aus Schritt n. mit dem in Schritt k. identifizierten und dem in Schritt m. erfassten wenigstens einen Defekt des Brillenglas-Halbfabrikats,
q. optional Vergleich des wenigstens einen Datensatzes von Rezeptdaten aus Schritt o. mit dem in Schritt k. identifizierten und dem in Schritt m. erfassten wenigstens einen Defekt des Brillenglas-Halbfabrikats,
r. Zuordnung des Brillenglas-Halbfabrikats in Abhängigkeit des Vergleichs aus Schritt p. und optional in Abhängigkeit des Vergleichs aus Schritt q. zu einer Kategorie,
   oder
s. Bereitstellen eines Brillenglas-Fertigfabrikats, welches optional auf wenigstens einer der optisch wirksamen Zielflächen beschichtet ist,
t. Identifikation wenigstens eines optional vorhandenen Defekts des Brillenglas-Fertigfabrikats und/oder Identifikation wenigstens eines optional vorhandenen Defekts der optional vorhandenen Beschichtung wenigstens einer der optisch wirksamen Zielflächen des Brillenglas-Fertigfabrikats,
u. optional Separation der in Schritt s. bereitgestellten Brillenglas-Fertigfabrikate in Brillenglas-Fertigfabrikate mit in Schritt t. identifiziertem wenigstens einen Defekt und Brillenglas-Fertigfabrikate ohne in Schritt t. identifizierten Defekt,
v. Erfassen der Position und optional der Größe des in Schritt t. identifizierten wenigstens einen Defekts,
w. Bereitstellen wenigstens eines Datensatzes von Formranddaten,
x. optional Bereitstellen wenigstens eines Datensatzes von Rezeptdaten,
y. Vergleich des wenigstens einen Datensatzes von Formranddaten aus Schritt w. mit dem in Schritt t. identifizierten und dem in Schritt v. erfassten wenigstens einen Defekt des Brillenglas-Fertigfabrikats,
z. optional Vergleich des wenigstens eines Datensatzes von Rezeptdaten aus Schritt x. mit dem in Schritt t. identifizierten und dem in Schritt v. erfassten wenigstens einen Defekt des Brillenglas-Fertigfabrikats,
aa. Zuordnung des Brillenglas-Fertigfabrikats in Abhängigkeit des Vergleichs aus Schritt x. und optional in Abhängigkeit des Vergleichs aus Schritt z. zu einer Kategorie.

Jeweils im zweiten Schritt des erfindungsgemäßen Verfahrens, d.h. ausgehend von einem Brillenglas-Rohling Schritt b., ausgehend von einem Brillenglas-Halbfabrikat Schritt k. und ausgehend von einem Brillenglas-Fertigfabrikat Schritt t., umfasst die Identifikation wenigstens eines optional vorhandenen Defekts des Brillenglas-Rohlings, des Brillenglas-Halbfabrikats bzw. des Brillenglas-Fertigfabrikats vorzugsweise eine Identifikation i) auf und/oder in einem Brillenglas-Rohling bzw. i) auf und/oder in einem Brillenglas-Halbfabrikat und/oder ii) auf und/oder in wenigstens einer optional vorhandenen Beschichtung der optisch wirksamen Zielfläche des Brillenglas-Halbfabrikats bzw. i) auf und/oder in einem Brillenglas-Fertigfabrikat und/oder ii) auf und/oder in der optional vorhandenen Beschichtung wenigstens einer optisch wirksamen Zielfläche des Brillenglas-Fertigfabrikats.

Bei dem optional vorhandenen wenigstens einen Defekt handelt es sich bevorzugt um einen lokalen, kosmetischen Defekt. Bei einem kosmetischen Defekt handelt es sich um einen Defekt, der die dioptrische Wirkung des fertig bearbeiteten und formgerandeten Brillenglases nicht oder nur unwesentlich beeinträchtigt. Dies können z.B. kleinere mechanische Defekte wie etwa Kratzer, Ausbrüche, Erhebungen, Verwerfungen oder Unterwanderungen sein, Einschlüsse wie etwa Staubpartikel oder Bläschen oder produktionsbedingte Mängel wie etwa Schlieren, Lacksäume oder Farbfehler in der Beschichtung oder Tönung.

Ausgangspunkt für die Herstellung von Brillengläsern gemäß wenigstens eines Datensatzes von Formranddaten ist im Rahmen dieser Erfindung ein Brillenglas-Rohling oder ein Brillenglas-Halbfabrikat oder ein Brillenglas-Fertigfabrikat.

Ein Brillenglas-Halbfabrikat, auch als Brillenglas-Halbfertigfabrikat, Halbfertigfabrikat oder Halbfabrikat bezeichnet, ist ein Brillenglas-Rohling, dessen Vorderfläche oder Rückfläche bereits die endgültige optisch wirksame Zielfläche ist. Die für die Anordnung auf der Objektseite bestimmte optisch wirksame Zielfläche eines Brillenglases wird als Vorderfläche bezeichnet, die für die Anordnung auf der Augenseite bestimmte optisch wirksame Zielfläche eines Brillenglases wird Rückfläche genannt. Die dazwischen liegende entweder unmittelbar eine Kante bildende oder mittelbar über eine Kantenfläche einendseitig an die Vorderfläche und andernendseitig an die Rückfläche angrenzende Fläche bezeichnet man als Zylinderrandfläche. Die Begriffe Vorderfläche, Rückfläche und Zylinderrandfläche werden jeweils für einen Brillenglas-Rohling, ein Brillenglas-Halbfabrikat und ein Brillenglas-Fertigfabrikat analog verwendet. Bei einem Brillenglas-Rohling entspricht weder die Vorderfläche noch die Rückfläche bereits den endgültigen, optisch wirksamen Zielflächen.

Ein Brillenglas-Fertigfabrikat, auch als Fertigfabrikat oder fertiges Brillenglas bezeichnet, ist ein Brillenglas, dessen Vorderfläche und Rückfläche bereits die endgültige, optisch wirksame Zielfläche ist. Ein Brillenglas-Fertigfabrikat kann entweder beispielsweise in einer Gießform mit einer Vorderflächenformschale und einer Rückflächenformschale, die mittels eines Dichtrings einen Hohlraum bildend voneinander beabstandet sind, abgegossen oder alternativ mittels eines Rx-Prozesses gefertigt werden. Unter Rx-Prozess wird die auftragsspezifische Rezeptfertigung entsprechend der Verschreibungsdaten für einen Brillenträger verstanden. Als Ausgangsmaterial für den Rx-Prozess dient ein Brillenglas-Halbfabrikat. Ein Brillenglas-Fertigfabrikat wird in der Regel noch formgerandet, d.h. durch Randbearbeitung in die endgültige, an die Brillenfassung angepasste Größe und Form gebracht.

Der Brillenglas-Rohling, das Brillenglas-Halbfabrikat bzw. das Brillenglas-Fertigfabrikat kann jeweils auf einem Grundmaterial umfassend ein mineralisches Glas oder ein organisches Material basieren. In nachstehender Tabelle 1 sind einige Beispiele für diese Grundmaterialien aufgeführt.

**Tabelle 1: Beispiele für Grundmaterialien für Brillenglas-Rohlinge, Brillenglas-Halbfabrikate bzw. Brillenglas-Fertigfabrikate**

| Handelsname | Grundmaterial | Mittlerer Brechungsindex n* | Abbe-Zahl v* |
|---|---|---|---|
| CR 39, CR 330, CR 607, CR 630 | Polyallyldiglycolcarbonat ((P)ADC) | 1,500 | 56 |
| RAV 700, 7NG, 7AT, 710, 713, 720 | | | |
| RAVolution | Polyharnstoff / Polyurethan | 1,500 | 54 |
| Trivex | Polyharnstoff / Polyurethan | 1,530 | 45 |
| Panlite, Lexan | Polycarbonat (PC) | 1,590 | 29 |
| MR 6 | Polythiourethan | 1,598 | |
| MR 8 | Polythiourethan | 1,598 | 41 |
| MR 7 | Polythiourethan | 1,664 | 32 |
| MR 10 | Polythiourethan | 1,666 | 32 |
| MR 174 | Polyepisulfid | 1,738 | 32 |
| MGC 1.76 | Polyepisulfid | 1,76 | 30 |
| | Mineral 1.5 | 1,525 | 58 |
| | Mineral 1.6 | 1,604 | 44 |

| | | | |
|---|---|---|---|
| * bezogen auf Natrium D-Linie | | | |

Die optisch wirksame Zielfläche des Brillenglas-Halbfabrikats kann bzw. wenigstens eine optisch wirksame Zielfläche des Brillenglas-Fertigfabrikats kann mit wenigstens einer Funktionsschicht versehen sein. Derartige Funktionsschichten sind Schichten, die die jeweilige Oberfläche mit vorbestimmten und für den Brillenträger vorteilhaften Eigenschaften ausstatten. Derartige vorteilhafte Eigenschaften sind neben optischen Eigenschaften wie z.B. Entspiegelung, Verspiegelung, Lichtpolarisierung, Phototropie usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften. Beispiele für Funktionsbeschichtungen entnimmt man z.B. den Dokumenten WO 10/109154 A1, WO 01/55752 A1 und DE 10 2008 041 869 A1.

Unter einem Datensatz von Formranddaten versteht man im Rahmen dieser Erfindung geometrische Daten, die es erlauben, ein Brillenglas-Fertigfabrikat beispielsweise mittels eines Schleifautomaten so einzuschleifen, dass es in eine gewünschte Brillenfassung passgenau eingefügt werden kann.

Der Datensatz von Rezeptdaten beinhaltet im Rahmen dieser Erfindung die zur optischen Korrektionswirkung eines Brillenglases erforderlichen Parameter, die gegebenenfalls der Korrektur der Fehlsichtigkeit des Brillenträgers dienen. Unter optischer Korrektionswirkung wird die sphärische Korrektion, die astigmatische Korrektion und die Korrektion der Achslage sowie optional die Korrektion durch ein Prisma mit Basislage verstanden. Diese optische Korrektionswirkung ist herkömmlicherweise für die Ferne in Einstärkenbrillengläsern verwirklicht. Bei Mehrstärken-brillengläsern, beispielsweise bifokalen Brillengläsern oder Gleitsichtbrillengläsern, kann die optische Korrektionswirkung für die Ferne und/oder für die Nähe jeweils eine sphärische Korrektion, eine astigmatische Korrektion, eine Korrektion der Achslage sowie optional eine Korrektion durch ein Prisma mit Basislage im Nahteil beinhalten. Der Datensatz von Rezeptdaten wird in der Regel von einem Augenarzt oder Augenoptiker im Zuge der subjektiven Refraktionsmessung ermittelt und in ein Sehhilfenrezept übertragen, anhand dessen dann eine individuelle Korrektionsbrille gefertigt werden kann. Der Datensatz von Rezeptdaten im Sinne dieser Erfindung kann auch zur Herstellung von Brillengläsern ohne optische Korrektionswirkung dienen.

Das erfindungsgemäße Verfahren umfasst im jeweils letzten Verfahrensschritt die Zuordnung des Brillenglas-Rohlings bzw. des Brillenglas-Halbfabrikats bzw. des Brillenglas-Fertigfabrikats zu einer Kategorie, wobei diese Zuordnung in Abhängigkeit des für den Brillenglas-Rohling durchgeführten Vergleichs aus den Schritten g. und h. bzw. des für das Brillenglas-Halbfabrikat durchgeführten Vergleichs aus Schritt p., optional Schritt q. bzw. des für das Brillenglas-Fertigfabrikat durchgeführten Vergleichs aus Schritt y., optional Schritt z. erfolgt.

Hierbei kann die Kategorie ausgewählt werden aus:
Kategorie 1:
   Der Brillenglas-Rohling mit wenigstens einem identifizierten und positionsbestimmten Defekt wird gemäß wenigstens einem konkreten Datensatz von Rezeptdaten und gemäß wenigstens einem konkreten Datensatz von Formranddaten weiterverarbeitet oder
Kategorie 2:
   Das Brillenglas-Halbfabrikat bzw. das Brillenglas-Fertigfabrikat mit jeweils wenigstens einem, jeweils identifiziertem und jeweils positionsbestimmtem Defekt wird gemäß wenigstens einem konkreten Datensatz von Formranddaten und/oder gemäß einem konkreten Datensatz von Rezeptdaten weiterverarbeitet oder
Kategorie 3:
   Der Brillenglas-Rohling bzw. das Brillenglas-Halbfabrikat bzw. das Brillenglas-Fertigfabrikat mit jeweils wenigstens einem, jeweils identifiziertem und jeweils positionsbestimmtem Defekt wird gemäß wenigstens einem abstrakten Datensatz von Formranddaten in einen Zwischenlagerbestand aufgenommen oder
Kategorie 4:
   Der Brillenglas-Rohling bzw. das Brillenglas-Halbfabrikat bzw. das Brillenglas-Fertigfabrikat mit jeweils wenigstens einem, jeweils identifiziertem und jeweils positionsbestimmtem Defekt wird verworfen.

Bei der Herstellung von Brillenglas-Rohlingen kann wenigstens ein Defekt im Inneren des Brillenglas-Rohlings auftreten. Defekte auf wenigstens einer Oberfläche eines Brillenglas-Rohlings werden im Rahmen dieser Erfindung wegen der Bearbeitung beider Oberflächen gemäß eines Datensatzes von Rezeptdaten nicht weiter berücksichtigt.

Bei der Herstellung von Brillenglas-Halbfabrikaten bzw. Brillenglas-Fertigfabrikaten können Defekte auf der optisch wirksamen Zielfläche des Brillenglas-Halbfabrikats bzw. auf wenigstens einer der optisch wirksamen Zielflächen des Brillenglas-Fertigfabrikats oder unterhalb derselben, d.h. im Inneren des Brillenglas-Halbfabrikats bzw. im Inneren des Brillenglas-Fertigfabrikats auftreten. Auch die optional wenigstens eine, auf der optisch wirksamen Zielfläche des Brillenglas-Halbfabrikats, bzw. die optional wenigstens eine, auf wenigstens einer der optisch wirksamen Zielflächen des Brillenglas-Fertigfabrikats, vorhandene Beschichtung kann wenigstens einen Defekt aufweisen. Bislang wurden Brillenglas-Rohlinge bzw. Brillenglas-Halbfabrikate bzw. Brillenglas-Fertigfabrikate mit wenigstens einem Defekt des Brillenglas-Rohlings bzw. des Brillenglas-Halbfabrikats bzw. des Brillenglas-Fertigfabrikats und/oder der Beschichtung der optisch wirksamen Zielfläche des Brillenglas-Halbfabrikats bzw. der Beschichtung der wenigstens einen optisch wirksamen Zielfläche des Brillenglas-Fertigfabrikats in der Regel verworfen.

Gemäß Kategorie 1 werden wenigstens ein konkreter Datensatz von Rezeptdaten, welcher die Rezeptdaten für ein konkret herzustellendes Brillenglas umfasst, sowie ein konkreter Datensatz von Formranddaten, welcher die Formranddaten für ein konkret herzustellendes Brillenglas umfasst, bereitgestellt.

Gemäß Kategorie 3 wird ein abstrakter Datensatz von Formranddaten, welcher mögliche Formranddaten eines in einem Zwischenlager aufzubewahrenden Brillenglas-Rohlings bzw. eines Brillenglas-Halbfabrikats bzw. eines Brillenglas-Fertigfabrikats umfasst, bereitgestellt. Ein abstrakter Datensatz von Formranddaten beinhaltet Formranddaten, bei denen beispielsweise Bereiche definiert wurden, die mit einer bestimmten Wahrscheinlichkeit beim Formranden abgetrennt werden. So ist beispielsweise bei einem Brillenglas-Rohling bzw. Brillenglas-Halbfabrikat bzw. Brillenglas-Fertigfabrikat davon auszugehen, dass im späteren nasalen Bereich dieses Brillenglas-Rohlings bzw. Brillenglas-Halbfabrikats bzw. Brillenglas-Fertigfabrikats mehr abgetrennt werden wird, als im späteren temporalen Bereich. Auch ist bei einem Defekt im Randbereich eines Brillenglas-Rohlings bzw. Brillenglas-Halbfabrikats bzw. Brillenglas-Fertigfabrikats, beispielsweise einem Defekt, welcher sich in einem Abstand von maximal 7 mm, bevorzugt maximal 4 mm, weiter bevorzugt maximal 2 mm, besonders bevorzugt maximal 1 mm, jeweils betrachtet aus der Draufsicht auf eine Oberfläche zur nächstgelegenen Schnittpunkt besagter Oberfläche mit der Zylinderrandfläche befindet, davon auszugehen, dass dieser Bereich beim abschließenden Formranden entfernt wird. Sofern der Brillenglas-Rohling bzw. das Brillenglas-Halbfabrikat bzw. das Brillenglas-Fertigfabrikat neben dem wenigstens einen Defekt im Randbereich also keinen weiteren Defekt mehr aufweist, kann der Brillenglas-Rohling bzw. das Brillenglas-Halbfabrikat bzw. das Brillenglas-Fertigfabrikat gemäß einer der Kategorien 1, 2 oder 3 weiterverarbeitet werden. Ein konkreter Datensatz von Formranddaten gemäß Kategorie 1 oder 2 und ein abstrakter Datensatz von Formranddaten gemäß Kategorie 3 werden im Rahmen der vorliegenden Erfindung auch als Datensatz von Formranddaten bezeichnet.

Bei den Defekten im Inneren eines Brillenglas-Rohlings oder im Inneren eines Brillenglas-Halbfabrikats oder im Inneren eines Brillenglas-Fertigfabrikats kann es sich beispielsweise um Einschlüsse von Fremdpartikeln, Luftbläschen oder Schlieren handeln. Bei den Defekten auf der optisch wirksamen Zielfläche eines Brillenglas-Halbfabrikats bzw. auf der wenigstens einen optisch wirksamen Zielfläche eines Brillenglas-Fertigfabrikats kann es sich beispielsweise um Kratzer, Ausbrüche, Erhebungen, Verwerfungen oder um eine andere Beschädigung wenigstens einer optisch wirksamen Zielfläche handeln. Derartige Defekte können beispielsweise beim Herausnehmen des Brillenglas-Halbfabrikats oder des Brillenglas-Fertigfabrikats aus der entsprechenden Gießform entstehen, beispielsweise durch Anhaftung der optisch wirksamen Zielfläche des Brillenglas-Halbfabrikats bzw. durch Anhaftung wenigstens einer optisch wirksamen Zielfläche des Brillenglas-Fertigfabrikats jeweils an der Gießform. Beispielsweise können auf diese Weise Krater entstehen. Defekte, welche beim Herausnehmen aus der Gießform entstehen können, können beispielsweise auch durch Anhaftung von Gießformteilen an der optisch wirksamen Zielfläche des Brillenglas-Halbfabrikats bzw. an der wenigstens einen optisch wirksamen Zielfläche des Brillenglas-Fertigfabrikats Erhöhungen auf der optisch wirksamen Zielfläche bewirken. Alternativ können durch an der Gießform anhaftende Reste oder Verschmutzungen Anhaftungen oder oberflächennahe Defekte an der optisch wirksamen Zielfläche des Brillenglas-Halbfabrikats bzw. an der wenigstens einen optisch wirksamen Zielfläche des Brillenglas-Fertigfabrikats verursacht werden.

Bei den Defekten der optional vorhandenen Beschichtung der optisch wirksamen Zielfläche des Brillenglas-Halbfabrikats bzw. der optional vorhandenen Beschichtung wenigstens einer optisch wirksamen Zielfläche des Brillenglas-Fertigfabrikats kann es sich beispielsweise um Kratzer, Anhaftungen, Lacksäume, Lackablaufspuren, Abplatzungen, Schichtablösungen, Farbfehler und/oder Einschlüsse von beispielsweise Fremdpartikeln handeln.

Der wenigstens eine Defekt des Brillenglas-Rohlings bzw. des Brillenglas-Halbfabrikats bzw. des Brillenglas-Fertigfabrikats und/oder der wenigstens eine Defekt der optional vorhandenen wenigstens einen Beschichtung der optisch wirksamen Zielfläche des Brillenglas-Halbfabrikats bzw. wenigstens einer der optisch wirksamen Zielflächen des Brillenglas-Fertigfabrikats können visuell, bevorzugt visuell unter Zuhilfenahme von Prüflicht, detektiert werden. Die Erfassung des wenigstens einen Defekts des Brillenglas-Rohlings bzw. des Brillenglas-Halbfabrikats bzw. des Brillenglas-Fertigfabrikats und/oder der wenigstens eine Defekt der optional vorhandenen wenigstens einen Beschichtung der optisch wirksamen Zielfläche des Brillenglas-Halbfabrikats bzw. wenigstens einer der optisch wirksamen Zielflächen des Brillenglas-Fertigfabrikats erfolgt bevorzugt mittels des in WO 2014/177632 A1, im Zusammenhang mit Figur 1, offenbarten Verfahrens. Besonders bevorzugt erfolgt die Erfassung des wenigstens einen Defekts des Brillenglas-Halbfabrikats bzw. des Brillenglas-Fertigfabrikats und/oder die Erfassung des wenigstens einen Defekts der optional vorhandenen wenigstens einen Beschichtung der optisch wirksamen Zielfläche des Brillenglas-Halbfabrikats bzw. wenigstens einer der optisch wirksamen Zielflächen des Brillenglas-Fertigfabrikats analog dem in WO 2005/017482 A1, Anspruch 1, für das Sichtbarmachen von Signierzeichen beschriebenen Verfahren. Vorstehend genannte Verfahren zur Detektion wenigstens eines Defekts können in unterschiedlichen Phasen des Fertigungsprozesses zum Einsatz kommen.

Im Fall von Kategorie 1 bestimmt der wenigstens eine konkrete Datensatz von Rezeptdaten und der wenigstens eine konkrete Datensatz von Formranddaten basierend auf der Form und Größe der Brillenfassung die endgültige Form des anzufertigenden, in die Brillenfassung passenden, Brillenglases, d.h. desjenigen Brillenglases, welches auch die für den Brillenträger erforderlichen Rezeptdaten beinhaltet und optional mit wenigstens einer Beschichtung wenigstens einer der optisch wirksamen Zielfläche belegt ist. Hierzu wird die endgültige Form des anzufertigenden Brillenglases virtuell in der Weise auf wenigstens die Vorderfläche des Brillenglas-Rohlings oder die Rückfläche des Brillenglas-Rohlings positioniert, dass der wenigstens eine Defekt nach dem Formranden außerhalb des anzufertigenden Brillenglases liegt.

Alternativ oder zusätzlich zu wenigstens einem konkreten Datensatz von Formranddaten erfolgt die virtuelle Positionierung des aus einem Brillenglas-Rohling herzustellenden Brillenglases im Fall von Kategorie 1 anhand eines konkreten Datensatzes von Rezeptdaten.

Auch im Fall von Kategorie 2 erfolgt die virtuelle Positionierung des aus einem Brillenglas-Halbfabrikat bzw. Brillenglas-Fertigfabrikat herzustellenden Brillenglases alternativ oder zusätzlich zu wenigstens einem konkreten Datensatz von Formranddaten anhand eines konkreten Datensatzes von Rezeptdaten.

Im Fall von Kategorie 3 bestimmt der wenigstens eine abstrakte Datensatz von Formranddaten, welche Brillenglas-Rohlinge bzw. welche Brillenglas-Halbfabrikate, welche optional auf der optisch wirksamen Zielfläche beschichtet sind, bzw. welche Brillenglas-Fertigfabrikate, welche optional auf wenigstens einer der optisch wirksamen Zielflächen beschichtet sind, als Lagerware in einem Zwischenlager aufbewahrt werden. Der abstrakte Datensatz von Formranddaten der Kategorie 3 wird bevorzugt so festgelegt, dass erfahrungsgemäß und bevorzugt der jeweiligen Brillenfassungsmode entsprechend zwischengelagerte BrillenglasRohlinge bzw. Brillenglas-Halbfabrikate bzw. Brillenglas-Fertigfabrikate innerhalb einer vorbestimmten Zeit t zur Anfertigung eines fertigen, in eine Brillenfassung passenden Brillenglases verwendet werden können. Der Wert für t kann dabei beispielsweise in Abhängigkeit von der zur Verfügung stehenden Zwischenlagerkapazität gewählt werden. Der abstrakte Datensatz von Formranddaten der Kategorie 3 wird weiter bevorzugt so festgelegt, dass jeweils, bevorzugt der jeweiligen Brillenfassungsmode entsprechend, bevorzugt wenigstens 47%, weiter bevorzugt wenigstens 54%, besonders bevorzugt wenigstens 66% und ganz besonders bevorzugt wenigstens 71% der zwischengelagerten Brillenglas-Rohlinge bzw. der Brillenglas-Halbfabrikate bzw. der Brillenglas-Fertigfabrikate zur Herstellung eines fertigen, formgerandeten Brillenglases herangezogen werden können. Hierzu wird jeweils ausgehend vom Zentrum des Brillenglas-Rohlings bzw. des Brillenglas-Halbfabrikats bzw. des Brillenglas-Fertigfabrikats eine Hüllkurve auf wenigstens einer Oberfläche des Brillenglas-Rohlings bzw. des Brillenglas-Halbfabrikats bzw. des Brillenglas-Fertigfabrikats virtuell aufgebracht, welche den wenigstens einen Defekt außerhalb dieser Hüllkurve zu liegen lassen kommt. Das Zentrum des Brillenglas-Rohlings bzw. des Brillenglas-Halbfabrikats bzw. des Brillenglas-Fertigfabrikats ist der derjenige Punkt auf derjenigen Oberfläche, auf der die Hüllkurve virtuell festgelegt wird, welcher dem Flächenschwerpunkt des Brillenglas-Rohlings bzw. des Brillenglas-Halbfabrikats bzw. des Brillenglas-Fertigfabrikats entspricht.

Bei der Einordnung des Brillenglas-Rohlings bzw. Brillenglas-Halbfabrikats bzw. Brillenglas-Fertigfabrikats in eine der Kategorien 1 bis 4 ist bevorzugt die Position des wenigstens einen Defekts zu berücksichtigen.

Befindet sich bei einem Brillenglas-Rohling wenigstens ein Defekt auf oder nahe der Vorderfläche des Brillenglas-Rohlings und/oder wenigstens ein Defekt auf oder nahe der Rückfläche des Brillenglas-Rohlings so kann der Brillenglas-Rohling weiter verarbeitet oder in ein Zwischenlager aufgenommen werden, sofern sich sämtliche Defekte gemäß wenigstens einem Datensatz von Formranddaten aus Kategorie 1 oder 3 außerhalb des in eine Brillenfassung einzupassenden Bereichs befinden oder virtuell positionieren lassen, d.h. sofern sich die Defekte in einem Bereich des Brillenglas-Rohlings befinden oder virtuell positionieren lassen, welcher beim Formranden ohnehin abgetrennt wird. Alternativ oder zusätzlich kann ein solcher Defekt gemäß einem Datensatz von Rezeptdaten durch mechanische Bearbeitung der Vorderfläche und der Rückfläche unter Erhalt zweier optisch wirksamer Zielflächen entfernt werden. Falls dies nicht der Fall ist, wird der Brillenglas-Rohling gemäß Kategorie 4 verworfen. Dem Formranden geht selbstverständlich die Überführung des Brillenglas-Rohlings in ein Brillenglas-Fertigfabrikat voraus. Befindet sich in einem Brillenglas-Rohling wenigstens ein Defekt im Inneren des Brillenglas-Rohlings, d.h. im Volumen zwischen Vorderfläche und Rückfläche, kann dieser wenigstens eine Defekt gemäß wenigstens einem Datensatz von Formranddaten gemäß Kategorie 1 oder 3 bei der Weiterverarbeitung unberücksichtigt bleiben oder gemäß Kategorie 4 verworfen werden. Alternativ kann dieser wenigstens eine Defekt gemäß wenigstens einem Datensatz von Rezeptdaten entweder durch mechanische Bearbeitung der Vorderfläche und der Rückfläche unter Erhalt zweier optisch wirksamer Zielflächen und gemäß wenigstens einem Datensatz von Formranddaten gemäß Kategorie 1 entfernt werden. Sofern dies nicht möglich ist, wird der Brillenglas-Rohling gemäß Kategorie 4 verworfen.

Befindet sich in einem Brillenglas-Halbfabrikat wenigstens ein Defekt auf der optisch wirksamen Zielfläche, so kann das Brillenglas-Halbfabrikat weiter verarbeitet oder in ein Zwischenlager aufgenommen werden, sofern sich sämtliche, auf der optisch wirksamen Zielfläche befindlichen Defekte gemäß wenigstens einem Datensatz von Formranddaten aus Kategorie 2 oder 3 außerhalb des in eine Brillenfassung einzupassenden Bereichs befinden oder virtuell positionieren lassen, d.h. sofern sich die Defekte in einem Bereich des Brillenglas-Halbfabrikats befinden oder virtuell positionieren lassen, welcher beim Formranden ohnehin abgetrennt wird. Falls dies nicht der Fall ist, wird das Brillenglas-Halbfabrikat gemäß Kategorie 4 verworfen. Dem Formranden geht selbstverständlich die Überführung des Brillenglas-Halbfabrikats in ein Brillenglas-Fertigfabrikat voraus.

Befindet sich in einem Brillenglas-Halbfabrikat wenigstens ein Defekt auf oder unterhalb der der optisch wirksamen Zielfläche gegenüberliegenden Fläche, kann dieser wenigstens eine Defekt gemäß wenigstens einem Datensatz von Formranddaten gemäß Kategorie 2 oder 3 bei der Weiterverarbeitung unberücksichtigt bleiben. Alternativ kann dieser Defekt gemäß wenigstens einem Datensatz von Rezeptdaten entweder durch mechanische Bearbeitung dieser gegenüberliegenden Fläche unter Erhalt der zweiten optisch wirksamen Zielfläche und/oder gemäß wenigstens einem Datensatz von Formranddaten gemäß Kategorie 2 entfernt werden. Sofern dies nicht möglich ist, wird das Brillenglas-Halbfabrikat gemäß Kategorie 4 verworfen.

Befindet sich in einem Brillenglas-Halbfabrikat wenigstens ein Defekt unterhalb der optisch wirksamen Zielfläche, kann das Brillenglas-Halbfabrikat gemäß wenigstens einem Datensatz von Rezeptdaten gemäß Kategorie 2 auf der der optisch wirksamen Zielfläche gegenüberliegenden Fläche mechanisch, unter Erhalt der zweiten optisch wirksamen Zielfläche, bearbeitet werden. Sofern durch die mechanische Bearbeitung der der optisch wirksamen Fläche gegenüberliegenden Fläche der wenigstens eine Defekt entfernt wird, muss das Brillenglas-Halbfabrikat nicht gemäß Kategorie 4 verworfen werden.

Weist die optional vorhandene Beschichtung der optisch wirksamen Zielfläche des Brillenglas-Halbfabrikats wenigstens einen Defekt auf, kann das beschichtete Brillenglas-Halbfabrikat gemäß wenigstens einem Datensatz von Formranddaten gemäß Kategorie 2 oder 3 weiter verwendet werden. Weist die Beschichtung jedoch wenigstens einen Defekt in einem Bereich der optisch wirksamen Zielfläche auf, welcher nach Überführung in ein Brillenglas-Fertigfabrikat beim abschließenden Formranden nicht entfernt wird, wird das Brillenglas-Halbfabrikat gemäß Kategorie 4 verworfen.

Befindet sich wenigstens ein Defekt auf wenigstens einer optisch wirksamen Zielfläche eines Brillenglas-Fertigfabrikats, kann das Brillenglas-Fertigfabrikat gemäß wenigstens einem Datensatz von Formranddaten aus Kategorie 2 oder 3 weiter verarbeitet werden. Sofern sich wenigstens ein Defekt innerhalb eines Bereichs, welcher nach dem finalen Formranden nicht abgetrennt ist, auf wenigstens einer optisch wirksamen Zielfläche des Brillenglas-Fertigfabrikats befindet, wird das Brillenglas-Fertigfabrikat gemäß Kategorie 4 verworfen.

Befindet sich wenigstens ein Defekt innerhalb des Brillenglas-Fertigfabrikats, d.h. zwischen den beiden optisch wirksamen Zielflächen, kann das Brillenglas-Fertigfabrikat gemäß wenigstens einem Datensatz von Formranddaten aus Kategorie 2 oder 3 weiter verwendet werden. Sofern sich wenigstens ein Defekt innerhalb eines Bereichs, welcher nach dem finalen Formranden des Brillenglas-Fertigfabrikats nicht abgetrennt ist, zwischen den optisch wirksamen Zielflächen des Brillenglas-Fertigfabrikats befindet, wird das Brillenglas-Fertigfabrikat gemäß Kategorie 4 verworfen.

Weist die wenigstens eine optional vorhandene Beschichtung der wenigstens einen optisch wirksamen Zielfläche des Brillenglas-Fertigfabrikats wenigstens einen Defekt auf, kann das beschichtete Brillenglas-Fertigfabrikat gemäß wenigstens einem Datensatz von Formranddaten aus Kategorie 2 oder 3 weiter verwendet werden. Sofern sich wenigstens ein Defekt der wenigstens einen Beschichtung wenigstens einer optisch wirksamen Zielfläche des Brillenglas-Fertigfabrikats in einem Bereich befindet, welcher nach dem finalen Formranden des beschichteten Brillenglas-Fertigfabrikats nicht abgetrennt ist, wird das beschichtete Brillenglas-Fertigfabrikat gemäß Kategorie 4 verworfen.

Bei einer Ausführungsform der Erfindung kann auch die optisch wirksame Zielfläche eines Brillenglas-Halbfabrikats bzw. wenigstens eine der optisch wirksamen Zielflächen des Brillenglas-Fertigfabrikats mechanisch bearbeitet werden. Bei dieser Ausführungsform können demzufolge Brillenglas-Halbfabrikate bzw. Brillenglas-Fertigfabrikate gemäß wenigstens einem Datensatz von Rezeptdaten und/oder gemäß wenigstens einem Datensatz von Formranddaten gemäß Kategorie 2 verarbeitet werden.

Die mechanische Bearbeitung umfasst im Rahmen dieser Erfindung das Fräsen und/oder das Schleifen und/oder das Drehen und/oder das Polieren wenigstens einer der Oberflächen des Brillenglas-Rohlings bzw. des Brillenglas-Halbfabrikats bzw., sofern erforderlich, wenigstens einer der optisch wirksamen Zielflächen des Brillenglas-Fertigfabrikats.

Bei einer Ausführungsform der Erfindung kann alternativ zur Verwerfung des Brillenglas-Rohlings bzw. Brillenglas-Halbfabrikats bzw. Brillenglas-Fertigfabrikats gemäß Kategorie 4 entschieden werden, ob der wenigstens eine Defekt gegebenenfalls für anzufertigende Brillengläser einer niedrigeren Preiskategorie noch akzeptabel ist und/oder ob sich der wenigstens eine Defekt in einem Bereich des fertigen, sich in einer Fassung befindlichen Brillenglases befindet wird oder sich virtuell dorthin positionieren lässt, durch welchen der Brillenträger im Regelfall nicht oder nur selten blickt. Im letzteren Fall kann es sich bei einem solchen ungenutzten oder wenig genutzten Bereich beispielsweise um eine Zone mit astigmatischen Abbildungsfehlern eines Gleitsichtglases oder um den äußersten Randbereich des fertigen Brillenglases handeln.

Das finale Formranden des Brillenglas-Fertigfabrikats kann beispielsweise mittels eines Schleifautomaten oder Fräsautomaten erfolgen.

Bei einer bevorzugten Ausführungsform werden in dem erfindungsgemäßen Verfahren nur Brillenglas-Rohlinge eingesetzt, welche auf der Vorderfläche und/oder auf der Rückfläche keinen Defekt innerhalb eines Kreises mit einem Radius von wenigstens 60 mm, bevorzugt wenigstens 48 mm, weiter bevorzugt wenigstens 36 mm, besonders bevorzugt wenigstens 27 mm und ganz besonders bevorzugt wenigstens 21 mm vom geometrischen Mittelpunkt des Brillenglas-Rohlings aufweisen. Bei dieser bevorzugten Ausführungsform werden in dem erfindungsgemäßen Verfahren nur Brillenglas-Halbfabrikate, welche optional auf der optisch wirksamen Zielfläche beschichtet sind, bzw. Brillenglas-Fertigfabrikate, welche optional auf wenigstens einer optisch wirksamen Zielfläche beschichtet sind, eingesetzt, welche jeweils auf der wenigstens einen optisch wirksamen Zielfläche keinen Defekt innerhalb eines Kreises mit einem Radius von wenigstens 60 mm, bevorzugt wenigstens 48 mm, weiter bevorzugt wenigstens 36 mm, besonders bevorzugt wenigstens 27 mm und ganz besonders bevorzugt von wenigstens 21 mm vom geometrischen Mittelpunkt des Brillenglas-Halbfabrikats oder des Brillenglas-Fertigfabrikats aufweisen. Vorstehend genannte Werte gelten bei dieser Ausführungsform entsprechend für wenigstens einen Defekt der optional vorhandenen wenigstens einen Beschichtung. Weiterhin gelten bei dieser Ausführungsform vorstehend aufgeführte Werte auch dann, wenn anstelle des Mittelpunktes der Ferndurchblickpunkt bei Einstärkenbrillengläsern bzw. der Prismenmesspunkt bei Mehrstärken-/Gleitsichtbrillengläsern zur Anwendung kommen. Vorstehender Radius des Kreises beschreibt sowohl für eine optisch wirksame Zielfläche als auch für eine optional vorhandene Beschichtung wenigstens einer optisch wirksamen Zielfläche die Abmessungen auf der jeweiligen Oberfläche. Weiterhin gelten vorstehende Angaben unabhängig davon, ob sich nur ein Randbereich des wenigstens einen Defekts oder ein vollständiger Defekt innerhalb des angegebenen Radius befindet.

Das erfindungsgemäße Verfahren kann sowohl für Brillengläser ohne nominelle dioptrische Wirkung als auch für Korrektionsbrillengläser eingesetzt werden. Ein Brillenglas kann weiterhin verschiedene Zwecke erfüllen, beispielsweise um in einer Sonnenbrille, Bildschirmarbeitsplatzbrille, Schminkbrille, Schutzbrille, Tauchmaske, Maskenbrille, Schießbrille, Lupenbrille, Prismenbrille, 3D-Brille Verwendung zu finden.

Das erfindungsgemäße Verfahren umfasst jeweils im zweiten Schritt die Identifikation wenigstens eines Defekts des Brillenglas-Rohlings (Schritt b.) oder des Brillenglas-Halbfabrikats (Schritt k.) oder des Brillenglas-Fertigfabrikats (Schritt t.). Wird kein Defekt festgestellt, wird der Brillenglas-Rohling oder das Brillenglas-Halbfabrikat oder das Brillenglas-Fertigfabrikat zur späteren Bearbeitung mit wenigstens einem beliebigen Datensatz von Formranddaten gemäß einer der Kategorien 1 bis 3 vorgesehen. Ein derartiger Brillenglas-Rohling bzw. ein derartiges Brillenglas-Halbfabrikat bzw. ein derartiges Brillenglas-Fertigfabrikat ohne wenigstens einen Defekt kann beispielsweise ebenso wie Brillenglas-Rohlinge bzw. Brillenglas-Halbfabrikate bzw. Brillenglas-Fertigfabrikate der Kategorie 3 in ein Zwischenlager aufgenommen und beispielweise für anzufertigende Brillengläser einer besonders großen Brillenfassung eingesetzt werden. Alternativ können derartige Brillenglas-Rohlinge oder Brillenglas-Halbfabrikate oder Brillenglas-Fertigfabrikate ohne wenigstens einen Defekt ohne Kenntnis von Formranddaten an einen Optiker gegeben werden. Ein Brillenglas-Rohling oder ein Brillenglas-Halbfabrikat oder ein Brillenglas-Fertigfabrikat jeweils ohne Defekt wird im dritten Schritt des erfindungsgemäßen Verfahrens von einem Brillenglas-Rohling (Schritt c.) oder einem Brillenglas-Halbfabrikat (Schritt I.) oder einem Brillenglas-Fertigfabrikat (Schritt u.) jeweils mit wenigstens einem Defekt separiert.

Sollte wenigstens ein Defekt auf und/oder in einem Brillenglas-Rohling bzw. auf und/oder in einem Brillenglas-Halbfabrikat bzw. auf und/oder in einem Brillenglas-Fertigfabrikat bzw. der wenigstens einen optional vorhandenen Beschichtung der optisch wirksamen Zielfläche des Brillenglas-Halbfabrikats bzw. der wenigstens einen optional vorhandenen Beschichtung wenigstens einer optisch wirksamen Zielfläche des Brillenglas-Fertigfabrikats identifiziert worden sein, wird die Position und/oder Größe des jeweiligen Defekts jeweils im vierten Schritt des erfindungsgemäßen Verfahrens erfasst.

Bei einer Ausführungsform der Erfindung erfolgt die Bestimmung der Position des wenigstens einen Defekts im Inneren, d.h. im Volumen, des Brillenglas-Rohlings bzw. auf oder unter der optisch wirksamen Zielfläche des Brillenglas-Halbfabrikats bzw. auf oder unter wenigstens einer der optisch wirksamen Zielflächen des Brillenglas-Fertigfabrikats unter gleichzeitiger Zuhilfenahme des geometrischen Mittelpunkts des Brillenglas-Rohlings bzw. des Brillenglas-Halbfabrikats bzw. des Brillenglas-Fertigfabrikats sowie eines weiteren, vorab definierten Bezugspunkts einer Markierung. Die beiden vorstehend genannten Punkte legen somit ein Koordinatensystem für den jeweiligen Brillenglas-Rohling bzw. für das jeweilige Brillenglas-Halbfabrikat bzw. das jeweilige Brillenglas-Fertigfabrikat fest. Bei der Markierung kann es sich beispielsweise um einen 1D-Barcode oder einen 2D-Barcode, wie beispielsweise auf der Rückfläche vieler Brillenglas-Halbfabrikate zu finden, oder um eine beliebige andere Markierung handeln, welche beispielsweise durch Abgießen, Anzeichnen, Aufdrucken, (Laser-)Gravieren und/oder Ritzen auf die Vorderfläche oder auf die Rückfläche eines Brillenglas-Rohlings bzw. auf eine optisch wirksame Zielfläche und/oder auf die der optisch wirksamen Zielfläche gegenüberliegenden Fläche des Brillenglas-Halbfabrikats bzw. auf eine optisch wirksame Zielfläche des Brillenglas-Fertigfabrikats aufgebracht werden kann. Bevorzugt erfolgt bei dieser Ausführungsform die Bestimmung des wenigstens einen Defekts unter gleichzeitiger Zuhilfenahme des geometrischen Mittelpunkts des Brillenglas-Rohlings bzw. Brillenglas-Halbfabrikats bzw. Brillenglas-Fertigfabrikats sowie eines weiteren, vorab definierten Punkts eines 2D-Barcodes, bevorzugt eines DataMatrix-Codes, besonders bevorzugt eines DataMatrix-Codes gemäß ISO/IEC 16022:2006.

Bei einer weiteren Ausführungsform erfolgt die Bestimmung der Position des wenigstens einen Defekts im Inneren, d.h. im Volumen, des Brillenglas-Rohlings bzw. auf oder unter der optisch wirksamen Zielfläche des Brillenglas-Halbfabrikats bzw. auf oder unter wenigstens einer der optisch wirksamen Zielflächen des Brillenglas-Fertigfabrikats anhand des durch einen DataMatrix-Code festgelegten Koordinatensystems, welches durch dessen geschlossene Kanten aufgespannt wird.

Bei einer bevorzugten Ausführungsform der Erfindung erfolgt die Bestimmung der Position des wenigstens einen Defekts im Inneren, d.h. im Volumen, des Brillenglas-Rohlings bzw. auf oder unter der optisch wirksamen Zielfläche eines Brillenglas-Halbfabrikats bzw. auf oder unter wenigstens einer der optisch wirksamen Zielflächen eines Brillenglas-Fertigfabrikats während des Zentrierens des Brillenglas-Rohlings bzw. des Brillenglas-Halbfabrikats bzw. des Brillenglas-Fertigfabrikats jeweils auf dem für die weitere Bearbeitung benötigten Blockstück. Dabei wird der Brillenglas-Rohling bzw. das Brillenglas-Halbfabrikats bzw. das Brillenglas-Fertigfabrikat auf dem Blockstück vorzugsweise dezentriert so angeordnet, dass der wenigstens eine Defekt entweder aufgrund wenigstens eines Datensatzes von Rezeptdaten und/oder wenigstens eines Datensatzes von Formranddaten nicht mehr in einem fertigen, formgerandeten Brillenglas zu liegen kommt. Beispielsweise erfolgt die vorstehend beschriebene Anordnung derart, dass der wenigstens eine Defekt außerhalb der zu bearbeitenden optisch wirksamen Zielfläche zu liegen kommt und / oder dass wenigstens ein Defekt an einer Position zu liegen kommt, an der aufgrund des wenigstens einen Datensatzes von Rezeptdaten ein für die vollständige Entfernung des Defektes hinreichender Materialabtrag vorgesehen ist. Bei dieser Ausführungsform ist die Verwendung eines Koordinatensystems zur Verortung des wenigstens einen Defektes nicht zwingend vonnöten, da durch das Anbringen des Blockstücks die zu bearbeitende Oberfläche des Brillenglas-Rohlings bzw. des Brillenglas-Halbfabrikats bzw. des Brillenglas-Fertigfabrikats, und damit auch die Position des wenigstens einen Defektes relativ dazu, bereits festgelegt ist. Für den Fall, dass das bei dieser Ausführungsform verwendete Brillenglas-Halbfabrikat auf der zu verblockenden Oberfläche keine sphärische Oberfläche aufweist, muss gegebenenfalls eine durch die dezentrierte Anbringung des Blockstücks eventuell auftretende unerwünschte prismatische Wirkung des so anzufertigenden Brillenglases mit dem Fachmann berufsgeläufigen Techniken, etwa der Verwendung von Prismenringen, einer Drehkeilvorrichtung oder einer entsprechenden Ansteuerung der Schleifmaschine, kompensiert werden.

Bei einer weiteren Ausführungsform der Erfindung kann die Position des wenigstens einen Defekts im Inneren, d.h. im Volumen, des Brillenglas-Rohlings bzw. auf oder unter der optisch wirksamen Zielfläche des Brillenglas-Halbfabrikats bzw. auf oder unter wenigstens einer der optisch wirksamen Zielflächen des Brillenglas-Fertigfabrikats als Radius in mm vom geometrischen Mittelpunkt des Brillenglas-Rohlings bzw. des Brillenglas-Halbfabrikats bzw. des Brillenglas-Fertigfabrikats angegeben werden. Bei dieser Ausführungsform wird der Radius bevorzugt ausgehend von dem, dem geometrischen Mittelpunkt am nächsten liegenden Punkt des jeweiligen Defekts bestimmt.

Bei einer weiteren Ausführungsform der Erfindung kann die Position des wenigstens einen Defekts auf der optisch wirksamen Zielfläche des Brillenglas-Halbfabrikats bzw. auf wenigstens einer der optisch wirksamen Zielflächen des Brillenglas-Fertigfabrikats anhand wenigstens einer der beiden Permanentmarkierungen, welche ein fertiges Brillenglas gemäß DIN EN ISO 8980-2:2004 aufweisen muss, durch Zuordnung eines Richtungsvektors auf die jeweilige Position eines Defekts auf derselben optisch wirksamen Zielfläche oder anhand eines Koordinatensystems bestimmt werden. Diese Ausführungsform erlaubt kein virtuelles Verschieben der endgültigen Form des anzufertigenden Brillenglases auf der optisch wirksamen Zielfläche, da durch die Permanentmarkierungen der Ferndurchblickpunkt eines Einstärkenbrillenglases bzw. der Prismenbezugspunkt eines Mehrstärkenglases bereits festgelegt ist. Allerdings kann auch hier wenigstens ein Datensatz von Formranddaten gemäß einer der Kategorien 2 oder 3 vorliegen, mit denen der wenigstens eine Defekt außerhalb des anzufertigenden Brillenglases liegt. Befindet sich beispielsweise wenigstens ein Defekt nahe des Ferndurchblickpunkts eines Einstärkenbrillenglases bzw. nahe des Prismenbezugspunkts eines Mehrstärkenglases kann bei dieser Ausführungsform zwar keine Verschiebung des anzufertigenden Brillenglases in einen nicht defektbehafteten Bereich des Brillenglas-Halbfabrikats bzw. des Brillenglas-Fertigfabrikats erfolgen, aber das Brillenglas-Halbfabrikat bzw. das Brillenglas-Fertigfabrikat kann gegebenenfalls dennoch für sehr kleine und/oder sehr schmale anzufertigende Brillengläser herangezogen werden.

Vorstehend aufgeführte Möglichkeiten zur Bestimmung wenigstens eines Defekts auf der optisch wirksamen Zielfläche des Brillenglas-Halbfabrikats bzw. wenigstens einer der optisch wirksamen Zielflächen des Brillenglas-Fertigfabrikats können analog zur Bestimmung wenigstens eines Defekts der wenigstens einen optional vorhandenen Beschichtung der optisch wirksamen Zielfläche des Brillenglas-Halbfabrikats bzw. wenigstens einer der optisch wirksamen Zielflächen des Brillenglas-Fertigfabrikats verwendet werden.

Bei einer weiteren Ausführungsform der Erfindung kann die Erfassung der Position des wenigstens einen Defekts im Inneren, d.h. im Volumen, des Brillenglas-Rohlings bzw. im Inneren, d.h. im Volumen, des Brillenglas-Halbfabrikats bzw. im Inneren, d.h. im Volumen, des Brillenglas-Fertigfabrikats beispielsweise durch einen dreidimensionalen Vektor oder ein dreidimensionales Koordinatentupel erfolgen. Die Erfassung der Position des wenigstens einen Defekts im Inneren eines Brillenglas-Rohlings ermöglicht die Entscheidung, ob ein Brillenglas-Rohling, wie bereits vorstehend beschrieben, gemäß wenigstens einem Datensatz von Rezeptdaten und wenigstens einem Datensatz von Formranddaten weiterverarbeitet werden kann oder ob der Brillenglas-Rohling verworfen werden muss. Die Erfassung der Position wenigstens eines Defekts im Inneren eines Brillenglas-Halbfabrikats ermöglicht die Entscheidung, ob ein Brillenglas-Halbfabrikat, gemäß wenigstens einem Datensatz von Formranddaten und/oder gemäß wenigstens einem Datensatz von Rezeptdaten, bevorzugt nach mechanischer Bearbeitung der der optisch wirksamen Zielfläche gegenüberliegenden Fläche, weiter verarbeitet werden kann oder ob das Brillenglas-Halbfabrikat verworfen werden muss. Die Erfassung der Position des wenigstens einen Defekts im Inneren eines Brillenglas-Fertigfabrikats ermöglicht die Entscheidung, ob ein Brillenglas-Fertigfabrikat, wie bereits vorstehend beschrieben, gemäß wenigstens einem Datensatz von Formranddaten weiterverarbeitet werden kann oder ob das Brillenglas-Fertigfabrikat verworfen werden muss. Die Erfassung der Position des wenigstens einen Defekts wenigstens einer optionalen Beschichtung der optisch wirksamen Zielfläche des Brillenglas-Halbfabrikats bzw. wenigstens einer optionalen Beschichtung wenigstens einer der optisch wirksamen Zielflächen des Brillenglas-Fertigfabrikats ermöglicht die Entscheidung, ob ein beschichtetes Brillenglas-Halbfabrikat oder ein beschichtetes Brillenglas-Fertigfabrikat gemäß wenigstens einem Datensatz von Formranddaten, wie vorstehend beschreiben, weiter verarbeitet werden kann oder verworfen werden muss. Die Weiterverarbeitung schließt in den soeben genannten Fällen dieser Ausführungsform eine Zwischenlagerung gemäß Kategorie 3 nicht aus.

Bei einer weiteren Ausführungsform der Erfindung kann mittels einer Aufnahmeeinrichtung, vorzugsweise einer Kamera, ein erstes Bild des wenigstens einen Defekts auf oder in einem Brillenglas-Rohling, auf oder in einem Brillenglas-Halbfabrikat oder auf oder einem Brillenglas-Fertigfabrikat aufgenommen werden, wobei ein Koordinatensystem vorzugsweise zu einer Halteeinrichtung für den Brillenglas-Rohling, für das Brillenglas-Halbfabrikat oder das Brillenglas-Fertigfabrikat ortsfest ist. Der wenigstens eine Defekt wird hierbei in einer zu der Halteeinrichtung referenzierten ersten Aufnahmeposition aus einer ersten Aufnahmerichtung mit einem ersten Abbildungsstrahlengang aufgenommen. Gleichzeitig wird der wenigstens eine Defekt in der ersten Aufnahmerichtung mit zu der optischen Achse des ersten Abbildungsstrahlengangs koaxialem Beleuchtungslicht beaufschlagt, wobei das Beleuchtungslicht den wenigstens einen Defekt durchsetzt und nach dem Durchsetzen des wenigstens einen Defekts in sich selbst zurück reflektiert wird, so dass das Beleuchtungslicht den wenigstens einen Defekt erneut durchsetzt. Außerdem wird bei dieser Ausführungsform wenigstens ein weiteres Bild des wenigstens einen Defekts in wenigstens einer von der ersten Aufnahmeposition verschiedenen weiteren, zu der Halteeinrichtung referenzierten Aufnahmeposition aus wenigstens einer von der ersten Aufnahmerichtung verschiedenen weiteren Aufnahmerichtung mit einem weiteren Abbildungsstrahlengang aufgenommen. Dabei wird der wenigstens eine Defekt in der wenigstens einen weiteren Aufnahmerichtung wiederum mit zu der optischen Achse des weiteren Abbildungsstrahlengangs koaxialem Beleuchtungslicht beaufschlagt, das den wenigstens einen Defekt durchsetzt und nach dem Durchsetzen des wenigstens einen Defekts in sich selbst zurück reflektiert wird, so dass das Beleuchtungslicht den wenigstens einen Defekt erneut durchsetzt. Aus Bildkoordinaten des wenigstens einen Defekts in dem ersten Bild und aus Bildkoordinaten des wenigstens einen Defekts in dem wenigstens einen weiteren Bild werden dann bei dieser Ausführungsform die Ortskoordinaten des wenigstens einen Defekts rekonstruiert.

Alternativ kann die Position wenigstens eines Defekt im Inneren eines Brillenglas-Rohlings bzw. eines Brillenglas-Halbfabrikats bzw. eines Brillenglas-Fertigfabrikats gemäß dem in Anspruch 1 der WO 2011/117539 A1 offenbarte Verfahren bestimmt werden.

Bei einer Ausführungsform der Erfindung kann auch die Art des wenigstens einen Defekts erfasst werden, d.h. es kann beispielsweise erfasst werden, ob es sich um eine Farbabweichung oder einen Einschluss handelt. Die Erfassung der Art des wenigstens einen Defekts spielt insbesondere für die Entscheidung, ob es sich um einen tolerierbaren Defekt, beispielsweise für Brillengläser einer niedrigeren Preiskategorie, handelt. Ein tolerierbarer Defekt kann beispielsweise auch ein Defekt sein, welcher sich in einem vom Brillenträger nicht genutzten Bereich des Brillenglases, beispielsweise in dessen Randbereich befindet. Darüber hinaus erlaubt die Erfassung der Art des wenigstens einen Defektes Rückschlüsse auf die Position dieses Defektes. So ist z.B. davon auszugehen, dass sich ein Kratzer auf einer der Oberflächen oder sich ein Bläschen im Inneren eines Brillenglas-Rohlings bzw. Brillenglas-Halbfabrikats bzw. Brillenglas-Fertigfabrikats befindet.

Neben der Position des wenigstens einen Defekts kann jeweils im vierten Schritt des erfindungsgemäßen Verfahrens, d.h. im Fall eines Brillenglas-Rohlings in Schritt d., im Fall eines Brillenglas-Halbfabrikats in Schritt m. und im Fall eines Brillenglas-Fertigfabrikats in Schritt v., auch die Größe des wenigstens einen Defekts erfasst werden. Damit kann auch dieser Parameter beim Vergleich des wenigstens eines Datensatzes von Formranddaten und der sich anschließenden Zuordnung zu einer Kategorie berücksichtigt werden.

Für die Bestimmung der Größe des wenigstens einen Defekts ist es hierbei unerheblich, ob der Brillenglas-Rohling, das Brillenglas-Halbfabrikat, das Brillenglas-Fertigfabrikat oder eine optional vorhandene wenigstens eine Beschichtung der optisch wirksamen Zielfläche des Brillenglas-Halbfabrikats bzw. einer der optisch wirksamen Zielflächen eines Brillenglas-Fertigfabrikats wenigstens einen Defekt aufweist. Die Größe des wenigstens einen Defekts kann beispielsweise auf einer Oberfläche oder auf einer der optisch wirksamen Zielflächen oder auf einer optional darauf vorhandenen Beschichtung als ein den Defekt abdeckenden bzw. umfassenden Kreis erfasst werden, wobei der Kreis beispielsweise über seinen Radius und die Position seines Mittelpunkts erfasst werden kann. Bevorzugt kann der wenigstens eine Defekt auf wenigstens einer Oberfläche oder auf einer optisch wirksamen Zielfläche oder einer optional darauf vorhandenen Beschichtung auch in seiner tatsächlichen Geometrie erfasst und beschrieben werden - dadurch wird die Ungenauigkeit durch einen zu großen Kreis verringert. Die Erfassung der Größe des wenigstens einen Defekts auf wenigstens einer Oberfläche oder auf einer optisch wirksamen Zielfläche oder auf einer optional darauf vorhandenen Beschichtung kann beispielsweise durch mehrere sich überlappende Kreise beschrieben werden, die den wenigstens einen Defekt genauer beschreiben als ein größerer Kreis, der den gesamten Defekt und weitere Bereiche der Oberfläche oder der wenigstens einen optisch wirksamen Zielfläche oder der optional darauf vorhandenen Beschichtung abdeckt, die jeweils keinen Defekt aufweisen.

Gemäß dem erfindungsgemäßen Verfahren wird der wenigstes einen Defekt umfassende Brillenglas-Rohling bzw. das wenigstens einen Defekt umfassende Brillenglas-Halbfabrikat bzw. das wenigstens einen Defekt umfassende Brillenglas-Fertigfabrikat jeweils mit wenigstens einem bereitgestellten Datensatz von Formranddaten verglichen. Bei diesem Vergleich des wenigstens einen Datensatzes von Formranddaten mit dem Brillenglas-Rohling bzw. Brillenglas-Halbfabrikat bzw. Brillenglas-Fertigfabrikat wird festgestellt, ob ein für eine vorgegebene Brillenfassung anzufertigendes Brillenglas auf diesem Brillenglas-Rohling, Brillenglas-Halbfabrikat oder Brillenglas-Fertigfabrikat so realisiert werden kann, dass der wenigstens eine Defekt in einem Bereich zu liegen kommt, der durch die Bearbeitung entsprechend des vorliegenden wenigstens einen Datensatzes von Formranddaten beim Formranden weggeschnitten wird. Im Falle eines Brillenglas-Rohlings wird hierfür weiterhin wenigstens ein Datensatz von Rezeptdaten berücksichtigt. Bevorzugt erfolgt diese Realisierung auch durch virtuelles Verschieben des für eine vorgegebene Brillenfassung anzufertigendes Brillenglases auf dem Brillenglas-Rohling, auf dem Brillenglas-Halbfabrikat bzw. auf dem Brillenglas-Fertigfabrikat. Ein virtuelles Verschieben des für eine vorgegebene Brillenfassung vorgegebenen Brillenglases auf dem Brillenglas-Rohling, Brillenglas-Halbfabrikat bzw. Brillenglas-Fertigfabrikat ermöglicht es somit, dass ein Brillenglas-Rohling, Brillenglas-Halbfabrikat bzw. Brillenglas-Fertigfabrikat mit wenigstens einem Defekt gegebenenfalls nicht verworfen werden muss, sondern die Anfertigung eines defektlosen fertigen formgerandeten Brillenglases gelingt. Diese virtuelle Verschiebung gemäß einem Datensatz von Formranddaten kann bei einem Brillenglas-Halbfabrikat alternativ oder zusätzlich zur mechanischen Bearbeitung gemäß einem Datensatz von Rezeptdaten, vorzugsweise der der optisch wirksamen Zielfläche gegenüberliegenden Fläche, erfolgen. Bei einem Brillenglas-Fertigfabrikat kann diese virtuelle Verschiebung alternativ oder zusätzlich zur mechanischen Bearbeitung gemäß einem Datensatz von Rezeptdaten einer der optisch wirksamen Zielflächen erfolgen.

Im jeweils letzten Schritt des erfindungsgemäßen Verfahrens wird der Brillenglas-Rohling bzw. das Brillenglas-Halbfabrikat bzw. das Brillenglas-Fertigfabrikat einer der vorstehend beschriebenen Kategorien zugeordnet.

Wenn erkannt wurde, dass der Brillenglas-Rohling mit wenigstens einem Datensatz von Rezeptdaten und wenigstens einem Datensatz von Formranddaten gemäß Kategorie 1 weiterverarbeitet werden kann, wird der Brillenglas-Rohling zur Bearbeitung mit diesen beiden Datensätzen zugeordnet.

Wenn erkannt wurde, dass das Brillenglas-Halbfabrikat bzw. das Brillenglas-Fertigfabrikat mit wenigstens einem vorliegenden konkreten Datensatz von Formranddaten gemäß Kategorie 2 weiterverarbeitet werden kann, so dass der wenigstens eine Defekt beim abschließenden Formranden entfernt wird, wird das Brillenglas-Halbfabrikat bzw. das Brillenglas-Fertigfabrikat zur Bearbeitung mit diesem Datensatz von Formranddaten zugeordnet.

Wenn erkannt wurde, dass der Brillenglas-Rohling bzw. das Brillenglas-Halbfabrikat bzw. das Brillenglas-Fertigfabrikat mit wenigstens einem abstrakten Datensatz von Formranddaten gemäß Kategorie 3 weiterverarbeitet werden kann, wird der Brillenglas-Rohling, das Brillenglas-Halbfabrikat bzw. das Brillenglas-Fertigfabrikat zu einem Zwischenlagerbestand zugeordnet.

Bei einer Ausführungsform der Erfindung können anstelle der Zuordnung zu einem Zwischenlagerbestand auch anstehende Aufträge für die Anfertigung eines Brillenglases dahingehend überprüft werden, ob ein Kategorie 3 zuzuordnender Brillenglas-Rohling bzw. ein Kategorie 3 zuzuordnendes Brillenglas-Halbfabrikat oder Brillenglas-Fertigfabrikat hierfür geeignet ist. Beispielsweise können bei dieser Ausführungsform vor Einlagerung in ein Zwischenlager wenigstens 100 anstehende Aufträge für die Anfertigung eines Brillenglases überprüft werden, ob sich ein passender Datensatz von Formranddaten und/oder ein passender Datensatz von Rezeptdaten hiermit unter Ausschluss des wenigstens einen Defektes verwirklichen lässt.

Wenn erkannt wurde, dass ein Brillenglas-Rohling bzw. Brillenglas-Halbfabrikat bzw. Brillenglas-Fertigfabrikat keiner der Kategorien 1, 2 oder 3 zugeordnet werden kann, wird der Brillenglas-Rohling bzw. das Brillenglas-Halbfabrikat bzw. das Brillenglas-Fertigfabrikat gemäß Kategorie 4 verworfen. Eine Ausnahme hiervon können Brillenglas-Rohlinge bzw. Brillenglas-Halbfabrikate bzw. Brillenglas-Fertigfabrikate mit wenigstens einem tolerierbaren Defekt bilden, d.h. einem Defekt, welcher auch im sich in der Brillenfassung befindlichen fertigen Brillenglas noch vorhanden ist. Tolerierbare Defekte können, wie vorstehend bereits erwähnt, gegebenenfalls in Brillengläsern einer geringeren Preiskategorie noch vorhanden sein.

Bei einer Ausführungsform der Erfindung kann bei der Anfertigung eines Brillenglases zunächst überprüft werden, ob sich im Zwischenlager Brillenglas-Rohling, ein Brillenglas-Halbfabrikat bzw. Brillenglas-Fertigfabrikat befindet, mit welchem sich ein Brillenglas mit wenigstens einem Datensatz von Formranddaten realisieren lässt. Wenn dies nicht der Fall ist, muss für die Anfertigung dieses Brillenglases ein neuer oder neu angefertigter Brillenglas-Rohling bzw. ein neues oder neu angefertigtes Brillenglas-Halbfabrikat bzw. ein neues oder neu angefertigtes Brillenglas-Fertigfabrikat verwendet werden. Alternativ zur Verwendung eines neuen Brillenglas-Rohlings bzw. Brillenglas-Halbfabrikats bzw. Brillenglas-Fertigfabrikats kann auch eine vorgegebene Zeit, beispielsweise 24 Stunden, gewartet werden, bis ein geeigneter Brillenglas-Rohling bzw. ein geeignetes Brillenglas-Halbfabrikat bzw. ein geeignetes Brillenglas-Fertigfabrikat dem Zwischenlager zugeordnet wurde - auf diese Weise kann der Anteil der neu anzufertigenden Brillenglas-Rohlinge bzw. Brillenglas-Halbfabrikate bzw. Brillenglas-Fertigfabrikate reduziert werden. Das Abwarten kann beispielsweise für die Anfertigung sehr kleiner und/oder sehr schmaler Brillengläser Sinn machen, die sich auch mittels Brillenglas-Halbfabrikaten bzw. Brillenglas-Fertigfabrikaten mit wenigstens einem Defekt nahe des Ferndurchblickpunkts bei Einstärkengläsern bzw. nahe des Prismenmesspunkts bei Mehrstärkengläsern realisieren lassen. Bei anzufertigenden kleinen und/oder schmalen Brillengläsern ist die Möglichkeit alternativer Anordnungen auf der optisch wirksamen Zielfläche eines Brillenglas-Halbfabrikats bzw. wenigstens einer der optisch wirksamen Zielflächen eines Brillenglas-Fertigfabrikats nochmals höher als bei einem anzufertigenden großen Brillenglas, das oftmals einen Großteil der optisch wirksamen Zielfläche eines Brillenglas-Halbfabrikats bzw. einen Großteil wenigstens einer der optisch wirksamen Zielflächen eines Brillenglas-Fertigfabrikats nutzen muss.

Bei einer weiteren Ausführungsform der Erfindung können Brillengläser nach dem erfindungsgemäßen Verfahren für verschiedene Anforderungen angefertigt werden, wobei die Brillengläser unterschiedliche Zonen auf dem Brillenglas aufweisen, in denen unterschiedliche Anforderungen an die Qualität gestellt werden können. Beispielsweise kann in einem gewissen Bereich eines fertigen formgerandeten Brillenglases eine Aberration akzeptiert werden, die dem Brillenträger selbst nicht störend auffällt. Wenn also wenigstens ein Defekt in einer solchen Akzeptanz-Zone zu liegen kommt, kann - bevorzugt in Abhängigkeit von Art und Schwere des Defekts - ein Brillenglas-Rohling, Brillenglas-Halbfabrikat oder Brillenglas-Fertigfabrikat jeweils mit wenigstens einem Defekt dennoch genutzt werden. Dadurch ist es möglich, selbst Brillenglas-Rohlinge, Brillenglas-Halbfabrikate bzw. Brillenglas-Fertigfabrikate jeweils mit wenigstens einem Defekt zu nutzen, welcher auf und/oder in dem fertigen, sich in einer Brillenfassung befindlichen Brillenglas verbleiben. Solche Akzeptanz-Zonen können beispielsweise Zonen mit astigmatischen Abbildungsfehlern beiderseits des Progressionskanals eines Gleitsichtglases, Zonen mit größeren astigmatischen und/oder sphärischen Restfehlern oder Bereiche außerhalb der zentralen Sehbereiche, beispielsweise temporal bei Sportgläsern, die weit um den Kopf gehen, sein.

Bei einer weiteren Ausführungsform der vorliegenden Erfindung umfasst das Erfassen des wenigstens einen Defekts die Erfassung der Art und/oder der Schwere des Defekts. Diese Informationen können beispielsweise benutzt werden, um die Verweilzeit im Zwischenlager der Kategorie 3 zu begrenzen, d.h. dass insbesondere ein Brillenglas-Rohling oder ein Brillenglas-Halbfabrikat oder ein Brillenglas-Fertigfabrikat jeweils mit wenigstens einem als "schwer" eingestuften Defekt, welches dennoch gemäß wenigstens einem Datensatz von Formranddaten zur Anfertigung eines Brillenglases herangezogen werden kann, schneller gemäß Kategorie 4 verworfen wird als ein Brillenglas-Rohling oder ein Brillenglas-Halbfabrikat oder ein Brillenglas-Fertigfabrikat jeweils mit einem als weniger "schwer" eingestuften Defekt. Für die Bewertung wenigstens eines Defekts sind bei dieser Ausführungsform beispielsweise zwei Klassifikationen denkbar:
1. nach Position und/oder Größe des Defekts: je zentraler, desto schwerer wiegt der Defekt,
2. abhängig nach Art und/oder Schwere des Defekts: leichte Schlieren beispielsweise können für ein Brillenglas niedrigerer Preiskategorie akzeptabel sein, insbesondere wenn die Schlieren in einer Akzeptanz-Zone des Brillenglases zu liegen kommen.

Derart klassifizierte Defekte können damit in einem vorbestimmten Bereich akzeptiert werden, insbesondere wenn sie beispielsweise nur in einer Akzeptanzzone zu liegen kommen und nicht in einer zentraleren und kritischeren Zone des fertigen, formgerandeten Brillenglases.

Bei einer weiteren Ausführungsform der vorliegenden Erfindung umfasst das Erfassen des wenigstens einen Defekts auch die Zuordnung des wenigstens einen Defekts zu einem Identifikationsmerkmal, z.B. zu einer Identifikationsnummer des Brillenglas-Rohlings bzw. des Brillenglas-Halbfabrikats bzw. des Brillenglas-Fertigfabrikats. Dies ermöglicht die eindeutige und nachvollziehbare Kennzeichnung eines Brillenglas-Rohlings bzw. Brillenglas-Halbfabrikats bzw. Brillenglas-Fertigfabrikats, welches jeweils wenigstens einen Defekt aufweist. Die Identifikationsnummer kann darüber hinaus beispielsweise auch zur Festlegung eines Bezugspunktes dienen. Die Identifikationsnummer kann so angebracht sein, dass sie auch nach dem Formranden auf dem fertigen Brillenglas, beispielsweise in dessen Randbereich oder als Teil der Permanentmarkierung gemäß DIN EN ISO 8980-2:2004, verbleibt und auslesbar ist. Bei dem Identifikationsmerkmal kann sich beispielsweise um einen 2D-Code, vorzugsweise einen Matrix-Code, einen Barcode, einen RFID-Code oder eine Seriennummer handeln.

Weitere Einzelheiten und Vorteile der Erfindung sollen nun anhand eines in den Zeichnungen dargestellten Ausführungsbeispiels näher erläutert werden.

Es zeigen:
- Fig. 1A-1 D: eine schematische zweidimensionale Draufsicht auf ein Brillenglas-Halbfabrikat bzw. ein Brillenglas-Fertigfabrikat mit einem Defekt und zwei geplanten Datensätzen von Formranddaten;
- Fig. 2A-2D: eine schematische zweidimensionale Draufsicht auf ein Brillenglas-Halbfabrikat bzw. Brillenglas-Fertigfabrikat mit einem Defekt und mögliche virtuelle Anordnungen des fertigen Brillenglases auf dem Brillenglas-Halbfabrikat bzw. Brillenglas-Fertigfabrikat;
- Fig. 3: einen schematische zweidimensionalen Querschnitt durch ein Brillenglas-Halbfabrikat mit einem Defekt und zwei geplanten Datensätze von Rezeptdaten und
- Fig. 4A-4C: einen schematischen zweidimensionalen Querschnitt durch ein Brillenglas-Halbfabrikat mit einem Defekt und einem geplanten Datensatz von Rezeptdaten und mögliche virtuelle Anordnungen des fertigen Brillenglases innerhalb des Brillenglas-Halbfabrikats;
- Fig. 5a-b: einen schematischen zweidimensionalen Querschnitt durch ein Brillenglas-Halbfabrikat oder ein Brillenglas-Fertigfabrikat jeweils mit einem Defekt, wobei das Brillenglas-Halbfabrikat auf einem Blockstück angeordnet ist.

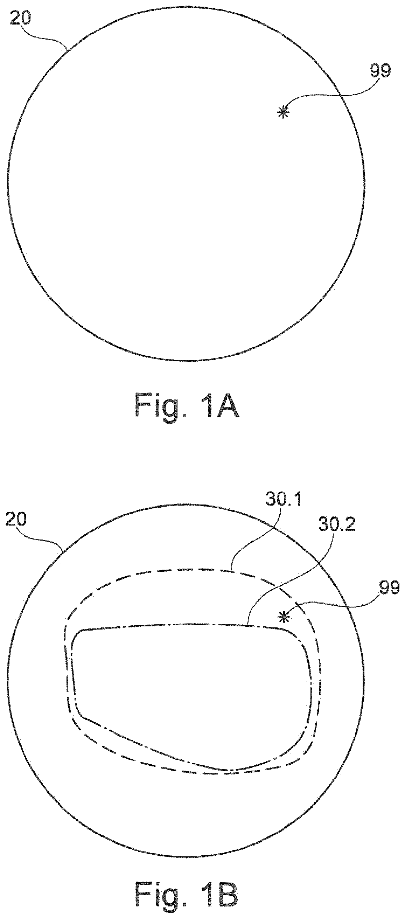

Fig. 1A-1D zeigt eine schematische zweidimensionale Draufsicht auf ein Brillenglas-Halbfabrikat bzw. Brillenglas-Fertigfabrikat mit einem Defekt und zwei geplanten Datensätzen von Formranddaten.

In Fig. 1A ist ein Brillenglas-Halbfabrikat bzw. Brillenglas-Fertigfabrikat 20 dargestellt, auf dem sich ein Defekt 99 befindet.

In Fig. 1B ist das Brillenglas-Halbfabrikat bzw. das Brillenglas-Fertigfabrikat 20 mit dem Defekt 99 aus Figur 1a zu sehen. Mit der einfachgestrichelten Linie ist die virtuelle Positionierung eines ersten fertigen Brillenglases entsprechend einem ersten Datensatz von Formranddaten 30.1 und mit der Strichpunkt-Linie ist die virtuelle Positionierung eines zweiten fertigen Brillenglases entsprechend einem zweiten Datensatz von Formranddaten 30.2 kenntlich gemacht.

Der Defekt 99 befindet sich innerhalb des ersten virtuell positionierten fertigen Brillenglases gemäß dem ersten Datensatz von Formranddaten 30.1, so dass dieses Brillenglas nicht mit dieser virtuellen Positionierung auf dem Brillenglas-Halbfabrikat bzw. Brillenglas-Fertigfabrikat 20 angefertigt werden kann. Die virtuelle Positionierung eines zweiten fertigen Brillenglases entsprechend einem zweiten Datensatz von Formranddaten 30.2 hingegen lässt erkennen, dass der Bereich, in dem der Defekt 99 liegt, beim finalen Formranden weggeschnitten werden wird. Daher kann das Brillenglas-Halbfabrikat bzw. Brillenglas-Fertigfabrikat 20 mit dem Defekt 99 verwendet werden, um ein fertiges, formgerandetes Brillenglas gemäß dem zweiten Datensatz von Formranddaten 30.2 herzustellen.

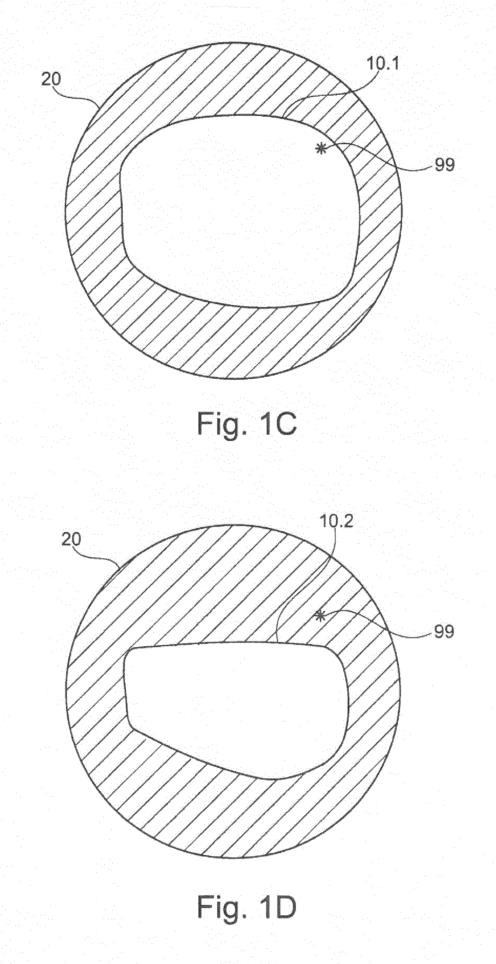

In Fig. 1C ist das Brillenglas-Halbfabrikat bzw. Brillenglas-Fertigfabrikat 20 mit dem Defekt 99 aus Figur 1a mit dem Brillenglas 10.1 dargestellt, das aus dem Brillenglas-Halbfabrikat bzw. Brillenglas-Fertigfabrikat 20 nach den ersten Datensatz von Formranddaten 30.1 herausgeschnitten würde. Der weggeschnittene Bereich des Brillenglas-Halbfabrikats bzw. Brillenglas-Fertigfabrikats 20 ist schraffiert dargestellt. Da der Defekt 99 auf dem fertigen, formgerandeten Brillenglas 10.1 verbliebe, ist diese Realisierung nicht bevorzugt. Da sich in diesem Fall der Defekt 99 im Randbereich des fertigen Brillenglases 10.1 befinden würde, könnte ein derartiges Brillenglas gegebenenfalls als fertiges, formgerandetes Brillenglas einer niedrigeren Preiskategorie angeboten werden.

In Fig. 1D ist das Brillenglas-Halbfabrikat bzw. das Brillenglas-Fertigfabrikat 20 mit dem Defekt 99 aus Figur 1a mit dem Brillenglas 10.2 dargestellt, das aus dem Brillenglas-Halbfabrikat bzw. Brillenglas-Fertigfabrikat 20 nach den zweiten Datensatz von Formranddaten 30.2 herausgeschnitten würde. Der weggeschnittene Bereich des Brillenglas-Halbfabrikats bzw. des Brillenglas-Fertigfabrikats 20 ist schraffiert dargestellt. Da der Defekt 99 auf dem Brillenglas 10.2 nicht mehr verbliebe, ist diese Realisierung möglich.

Erfindungsgemäß wird ein optional auf der optisch wirksamen Zielfläche beschichtetes Brillenglas-Halbfabrikat bzw. ein optional auf wenigstens einer der optisch wirksamen Zielflächen beschichtetes Brillenglas-Fertigfabrikat 20 aus Fig. 1A nach dessen jeweiliger Herstellung auf wenigstens einen Defekt untersucht, wobei der Defekt 99 auch auf der Beschichtung identifiziert werden kann.

Es werden dann Datensätze von Formranddaten 30.1 und 30.2 empfangen. Die jeweilige virtuelle Positionierung des entsprechenden fertigen, formgerandeten Brillenglases auf dem Brillenglas-Halbfabrikat bzw. Brillenglas-Fertigfabrikat 20 ist in Fig. 1B dargestellt.

Es wird nun verglichen, ob der erste Datensatz von Formranddaten 30.1 geeignet ist, um mit dem Brillenglas-Halbfabrikat bzw. dem Brillenglas-Fertigfabrikat 20, welches den Defekt 99 aufweist, ein fertiges Brillenglas herstellen zu können. Aus Fig. 1C ist zu erkennen, dass das fertige Brillenglas 10.1 den Defekt 99 tragen würde. Daher wird dieses Brillenglas-Halbfabrikat bzw. Brillenglas-Fertigfabrikat 20 vorzugsweise nicht mit diesem Datensatz von Formranddaten 30.1 genutzt werden. Aus Fig. 1D ist zu erkennen, dass das fertige Brillenglas 10.2 den Defekt 99 nicht tragen würde. Daher kann das Brillenglas-Halbfabrikat bzw. Brillenglas-Fertigfabrikat 20 mit dem Datensatz von Formranddaten 30.2 zur Herstellung eines fertigen Brillenglases genutzt werden.

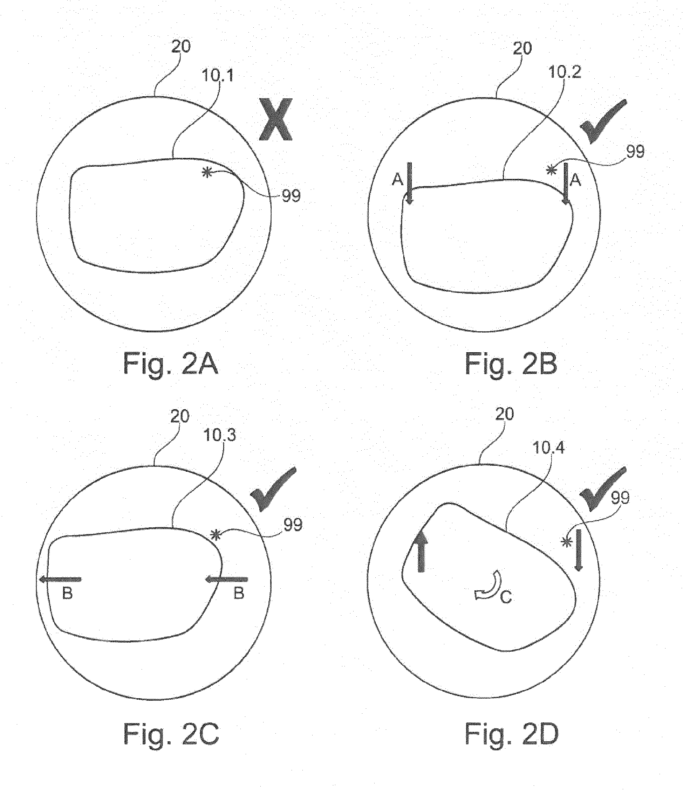

Fig. 2A-2D zeigen eine schematische zweidimensionale Draufsicht auf ein Brillenglas-Halbfabrikat bzw. Brillenglas-Fertigfabrikat 20 mit einem Defekt 99 und möglichen virtuellen Positionierungen eines herzustellenden Brillenglases in Varianten 10.1 bis 10.4 auf dem Brillenglas-Halbfabrikat bzw. Brillenglas-Fertigfabrikat 20.

In Fig. 2A ist ein Brillenglas-Halbfabrikat bzw. Brillenglas-Fertigfabrikat 20 mit einem Defekt 99 dargestellt. Der Defekt 99 kommt innerhalb der virtuellen Positionierung des herzustellenden Brillenglases 10.1 zu liegen. Daher ist es nicht bevorzugt das Brillenglas 10.1 mit diesem Brillenglas-Halbfabrikat bzw. Brillenglas-Fertigfabrikat 20 herzustellen. Wie bereits oben erwähnt, kann das Brillenglas 10.1 aber auch ein Brillenglas einer niedrigeren Preiskategorie darstellen, bei dem der Defekt 99 im Randbereich toleriert wird.

In Fig. 2B ist die virtuelle Positionierung des herzustellenden Brillenglases 10.1 aus Fig. 2A entlang der eingezeichneten Pfeile A verschoben worden und kommt nun in der virtuellen Positionierung des herzustellenden Brillenglases 10.2 zu liegen. Gemäß wenigstens einem Datensatz von Formranddaten ist dieses herzustellende Brillenglas 10.2 aus Fig. 1B identisch zu dem herzustellenden Brillenglas 10.1 aus Fig. 1A, jedoch vermeidet diese Verschiebung nach Fig. 2B den Defekt 99.

Genauso wird in Fig. 2C alternativ eine Verschiebung entlang der Pfeile B dargestellt, die die virtuelle Positionierung des herzustellenden Brillenglases 10.3 auf dem Brillenglas-Halbfabrikat bzw. Brillenglas-Fertigfabrikat 20 so wählt, dass der Defekt 99 nicht innerhalb des Brillenglases 10.3 zu liegen kommt.

In Fig. 2D ist gezeigt, dass auch durch eine Drehung entlang der Rotationsachse C eine virtuelle Positionierung für ein Brillenglas 10.4 auf dem Brillenglas-Halbfabrikat bzw. Brillenglas-Fertigfabrikat gefunden werden kann, bei der der Defekt 99 vermieden wird.

Welche der einzelnen Alternativen gewählt wird, kann im jeweiligen Schritt des Vergleichs gemäß des erfindungsgemäßen Verfahrens geklärt werden. Bei der Auswahl, welcher der einzelnen Alternativen aus den Fig. 2B, 2C oder 2D der Vorzug zu geben ist, kann optional auch wenigstens ein Datensatz von Rezeptdaten berücksichtigt werden. Auch kann die Optimierung der Fertigungsschritte für die einzelnen Varianten berücksichtigt werden.

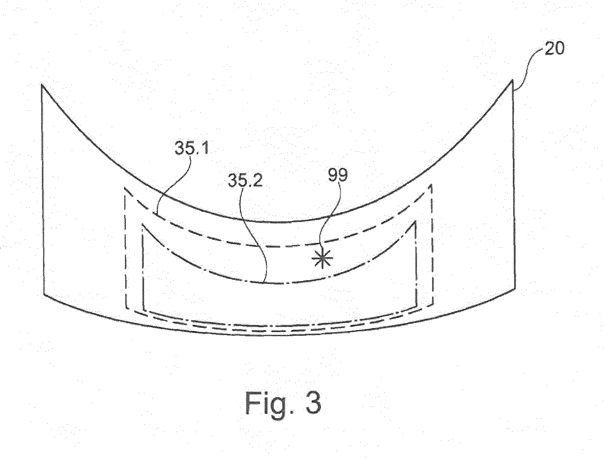

Fig. 3 zeigt einen schematischen zweidimensionalen Querschnitt durch ein Brillenglas-Halbfabrikat 20 mit einem Defekt 99 und zwei Datensätze von Rezeptdaten 35.1 und 35.2.

Es ist zu erkennen, dass die anzufertigenden Brillengläser gemäß beiden Datensätzen von Rezeptdaten 35.1 und 35.2 vollständig innerhalb des Brillenglas-Halbfabrikats 20 liegen. Es ist auch zu erkennen, dass in beiden Fällen die Datensätze von Formranddaten den Defekt 99 einschließen, da für beide anzufertigenden Brillengläser der Defekt 99 innerhalb der Datensätze von Formranddaten der Brillengläser liegt und beim finalen Formranden nicht weggeschnitten werden wird. Der Datensatz von Rezeptdaten 35.1 schließt den Defekt 99 ein, während der Datensatzes von Rezeptdaten 35.2 den Defekt 99 nicht einschließt. Im letzteren Fall wird bei der mechanischen Bearbeitung gemäß dem Datensatz von Rezeptdaten 35.2 der Defekt 99 entfernt.

Durch Berücksichtigung des Datensatzes von Rezeptdaten 35.2 ist damit dieses anzufertigende Brillenglas mit dem Brillenglas-Halbfabrikat 20 trotz des Defekts 99 realisierbar, auch wenn es nach einfacher Betrachtung des Datensatzes von Formranddaten hätte verworfen werden müssen. Damit kann der Ausschuss durch Berücksichtigung der Datensätze von Rezeptdaten reduziert werden.

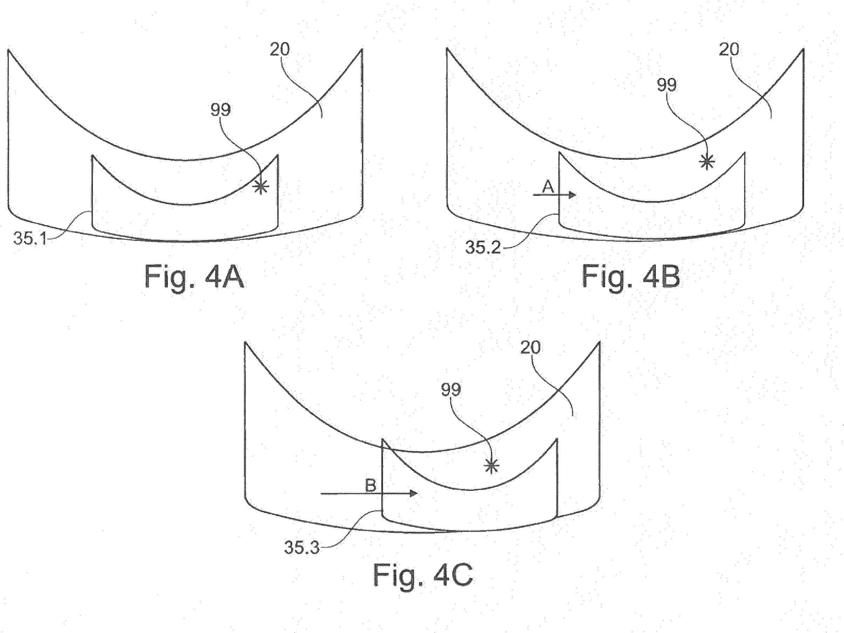

Fig. 4A-4C zeigen einen schematischen zweidimensionalen Querschnitt durch ein Brillenglas-Halbfabrikat 20 mit einem Defekt 99, die Datensätze von Rezeptdaten 35.1 bis 35.3 und mögliche virtuelle Positionierungen innerhalb des Brillenglas-Halbfabrikats 20.

In Fig. 4A ist ein Datensatz von geplanten Rezeptdaten 35.1 zu sehen, gemäß dem das anzufertigende Brillenglas zwar innerhalb des Brillenglas-Halbfabrikats 20 zu liegen kommt, wobei der Defekt 99 jedoch in dem anzufertigenden Brillenglas liegen wird. Eine solche Realisierung ist nicht bevorzugt. Wie bereits erwähnt, können Brillengläser mit einem Defekt 99 im Randbereich gegebenenfalls als Brillengläser einer niedrigeren Preiskategorie angeboten werden.

Gemäß dem erfindungsgemäßen Verfahren kann nun verglichen werden, ob dieses anzufertigende Brillenglas entsprechend des Datensatzes von Rezeptdaten 35.1 innerhalb des Brillenglas-Halbfabrikats 20 realisiert werden kann, so dass das anzufertigende Brillenglas innerhalb des Brillenglas-Halbfabrikats 20 verbleibt und gleichzeitig der Defekt 99 nicht innerhalb dieses anzufertigenden Brillenglases zu liegen kommt.

In Fig. 4B ist ein anzufertigendes Brillenglas entsprechend des Datensatzes von Rezeptdaten 35.2 dargestellt, das durch virtuelle Verschiebung des anzufertigenden Brillenglases aus Figur 4A entlang des Pfeils A auf dem Brillenglas-Halbfabrikat 20 ermöglicht wurde.

In Fig. 4C ist ein anzufertigendes Brillenglas entsprechend des Datensatzes von Rezeptdaten 35.3 dargestellt, das durch virtuelle Verschiebung des anzufertigenden Brillenglases aus Figur 4A durch Verschiebung entlang des Pfeils B auf dem Brillenglas-Halbfabrikat erreicht wurde.

Bei Vergleich dieser möglichen Anordnungen des anzufertigenden Brillenglases nach Fig. 4A, 4B und 4C wird festgestellt, dass das anzufertigende Brillenglas nach Fig. 4A und 4C bevorzugt nicht realisierbar ist, da in Fig. 4A der Defekt 99 im Randbereich des anzufertigenden Brillenglases liegt, während in Fig. 4C das anzufertigende Brillenglas nicht mehr komplett im Brillenglas-Halbfabrikat 20 zu liegen kommt. Allerdings befindet sich das anzufertigende Brillenglas nach Fig. 4B innerhalb des Brillenglas-Halbfabrikats 20 und der Defekt 99 kommt nicht innerhalb dieses anzufertigenden Brillenglases zu liegen. Damit wird das anzufertigende Brillenglas bevorzugt gemäß dem Datensatz von Rezeptdaten 35.2 nach Fig. 4B mittels des Brillenglas-Halbfabrikats 20 hergestellt.

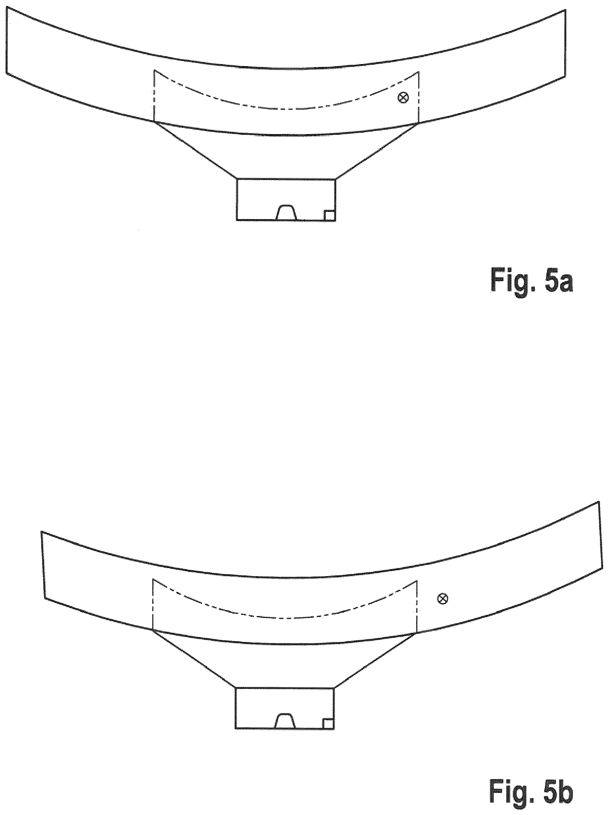

In Fig. 5a wird ein Querschnitt eines Brillenglas-Halbfabrikats oder Brillenglas-Fertigfabrikats gezeigt, welches zur Bearbeitung gemäß einem Datensatz von Rezeptdaten auf einem Blockstück angeordnet ist. In Figur 5a ist das Brillenglas-Halbfabrikat bzw. das Brillenglas-Fertigfabrikat zentral auf dem Blockstück angeordnet.

Fig. 5b zeigt einen Querschnitt eines Brillenglas-Halbfabrikats oder Brillenglas-Fertigfabrikats, welches zur Bearbeitung gemäß einem Datensatz von Rezeptdaten auf einem Blockstück angeordnet ist, wobei das Brillenglas-Halbfabrikat bzw. das Brillenglas-Fertigfabrikat im Vergleich zu Fig. 5a dezentriert angeordnet wurde. Diese Dezentrierung dient der Vermeidung des Defekts.

Mit dem erfindungsgemäßen Verfahren ist ein Verfahren bereitgestellt worden, mit dem eine Produktion von Brillengläsern mit reduziertem Ausschuss realisiert werden kann.

Ferner umfasst die vorliegende Offenbarung die folgenden Gegenstände, ohne jedoch darauf beschränkt zu sein:
1. Verfahren zur Herstellung eines Brillenglases (10) gemäß wenigstens eines Datensatzes von Formranddaten, wobei das Verfahren die folgenden Schritte umfasst:
   a. Bereitstellen eines Brillenglas-Rohlings,
   b. Identifikation wenigstens eines optional vorhandenen Defekts des Brillenglas-Rohlings,
   c. optional Separation der in Schritt a. bereitgestellten Brillenglas-Rohlinge in Brillenglas-Rohlinge mit in Schritt b. identifiziertem wenigstens einen Defekt und Brillenglas-Rohlinge ohne in Schritt b. identifizierten Defekt,
   d. Erfassen der Position und optional der Größe des in Schritt b. identifizierten wenigstens einen Defekts,
   e. Bereitstellen wenigstens eines Datensatzes von Rezeptdaten,
   f. Bereitstellen wenigstens eines Datensatzes von Formranddaten,
   g. Vergleich des wenigstens einen Datensatzes von Rezeptdaten aus Schritt e. mit dem in Schritt b. identifizierten und dem in Schritt d. erfassten wenigstens einen Defekt des Brillenglas-Rohlings,
   h. Vergleich des wenigstens einen Datensatzes von Formranddaten aus Schritt f. mit dem in Schritt b. identifizierten und dem in Schritt d. erfassten wenigstens einen Defekt des Brillenglas-Rohlings,
   i. Zuordnung des Brillenglas-Rohlings in Abhängigkeit des Vergleichs aus Schritt g. und in Abhängigkeit des Vergleichs aus Schritt h. zu einer Kategorie,
      oder
   j. Bereitstellen eines Brillenglas-Halbfabrikats (20), welches optional auf der optisch wirksamen Zielfläche beschichtet ist,
   k. Identifikation wenigstens eines optional vorhandenen Defekts des Brillenglas-Halbfabrikats und/oder Identifikation wenigstens eines optional vorhandenen Defekts der optional vorhandenen Beschichtung der optisch wirksamen Zielfläche des Brillenglas-Halbfabrikats,
   I. optional Separation der in Schritt j. bereitgestellten Brillenglas-Halbfabrikate in Brillenglas-Halbfabrikate mit in Schritt k. identifiziertem wenigstens einen Defekt und Brillenglas-Halbfabrikate ohne in Schritt k. identifizierten Defekt,
   m. Erfassen der Position und optional der Größe des in Schritt k. identifizierten wenigstens einen Defekts,
   n. Bereitstellen wenigstens eines Datensatzes von Formranddaten,
   o. optional Bereitstellen wenigstens eines Datensatzes von Rezeptdaten,
   p. Vergleich des wenigstens einen Datensatzes von Formranddaten aus Schritt n. mit dem in Schritt k. identifizierten und dem in Schritt m. erfassten wenigstens einen Defekt des Brillenglas-Halbfabrikats,
   q. optional Vergleich des wenigstens einen Datensatzes von Rezeptdaten aus Schritt o. mit dem in Schritt k. identifizierten und dem in Schritt m. erfassten wenigstens einen Defekt des Brillenglas-Halbfabrikats,
   r. Zuordnung des Brillenglas-Halbfabrikats in Abhängigkeit des Vergleichs aus Schritt p. und optional in Abhängigkeit des Vergleichs aus Schritt q. zu einer Kategorie,
      oder
   s. Bereitstellen eines Brillenglas-Fertigfabrikats (20), welches optional auf wenigstens einer der optisch wirksamen Zielflächen beschichtet ist,
   t. Identifikation wenigstens eines optional vorhandenen Defekts des Brillenglas-Fertigfabrikats und/oder Identifikation wenigstens eines optional vorhandenen Defekts der optional vorhandenen Beschichtung wenigstens einer der optisch wirksamen Zielflächen des Brillenglas-Fertigfabrikats,
   u. optional Separation der in Schritt s. bereitgestellten Brillenglas-Fertigfabrikate in Brillenglas-Fertigfabrikate mit in Schritt t. identifiziertem wenigstens einen Defekt und Brillenglas-Fertigfabrikate ohne in Schritt t. identifizierten Defekt,
   v. Erfassen der Position und optional der Größe des in Schritt t. identifizierten wenigstens einen Defekts,
   w. Bereitstellen wenigstens eines Datensatzes von Formranddaten,
   x. optional Bereitstellen wenigstens eines Datensatzes von Rezeptdaten,
   y. Vergleich des wenigstens einen Datensatzes von Formranddaten aus Schritt w. mit dem in Schritt t. identifizierten und dem in Schritt v. erfassten wenigstens einen Defekt des Brillenglas-Fertigfabrikats,
   z. optional Vergleich des wenigstens einen Datensatzes von Rezeptdaten aus Schritt x. mit dem in Schritt t. identifizierten und dem in Schritt v. erfassten wenigstens einen Defekt des Brillenglas-Fertigfabrikats,
   aa. Zuordnung des Brillenglas-Fertigfabrikats in Abhängigkeit des Vergleichs aus Schritt x. und optional in Abhängigkeit des Vergleichs aus Schritt z. zu einer Kategorie.
2. Verfahren nach Gegenstand 1, wobei der wenigstens eine Datensatz von Formranddaten konkret oder abstrakt ist.
3. Verfahren nach einem der vorstehenden Gegenstände, wobei ein konkreter Datensatz von Formranddaten einen Datensatz für ein konkret herzustellendes Brillenglas und ein abstrakter Datensatz von Formranddaten einen Datensatz für ein innerhalb der Zeit t herzustellendes Brillenglas umfasst.
4. Verfahren nach einem der vorstehenden Gegenstände, wobei der Brillenglas-Rohling einer der nachstehenden Kategorien zugeordnet wird:
   a) Kategorie 1, gemäß der der Brillenglas-Rohling mit wenigstens einem identifizierten und positionsbestimmten Defekt gemäß wenigstens einem konkreten Datensatz von Rezeptdaten und gemäß wenigstens einem konkreten Datensatz von Formranddaten weiterverarbeitet wird oder
   b) Kategorie 3, gemäß der der Brillenglas-Rohling mit wenigstens einem identifiziertem und positionsbestimmtem Defekt gemäß wenigstens einem abstrakten Datensatz von Formranddaten in einen Zwischenlagerbestand aufgenommen wird oder
   c) Kategorie 4, gemäß der der Brillenglas-Rohling mit wenigstens einem identifizierten und positionsbestimmten Defekt verworfen wird.
5. Verfahren nach einem der Gegenstände 1 bis 3, wobei das Brillenglas-Halbfabrikat bzw. das Brillenglas-Fertigfabrikat einer der nachstehenden Kategorien zugeordnet wird:
   a) Kategorie 2, gemäß der das Brillenglas-Halbfabrikat bzw. das Brillenglas-Fertigfabrikat mit jeweils wenigstens einem, jeweils identifiziertem und jeweils positionsbestimmtem Defekt gemäß wenigstens einem konkreten Datensatz von Formranddaten und/oder gemäß einem konkreten Datensatz von Rezeptdaten weiterverarbeitet wird oder
   b) Kategorie 3, gemäß der das Brillenglas-Halbfabrikat bzw. das Brillenglas-Fertigfabrikat mit jeweils wenigstens einem, jeweils identifiziertem und jeweils positionsbestimmtem Defekt gemäß wenigstens einem abstrakten Datensatz von Formranddaten in einen Zwischenlagerbestand aufgenommen wird oder
   c) Kategorie 4, gemäß der das Brillenglas-Halbfabrikat bzw. das Brillenglas-Fertigfabrikat mit jeweils wenigstens einem, jeweils identifiziertem und jeweils positionsbestimmtem Defekt verworfen wird.
6. Verfahren nach einem der vorstehenden Gegenstände, wobei der Brillenglas-Rohling bzw. das Brillenglas-Halbfabrikat in ein Brillenglas-Fertigfabrikat überführt werden und aus dem jeweiligen Brillenglas-Fertigfabrikat nach dem finalen Formranden ein fertiges, in eine Fassung passendes Brillenglas erhalten wird.
7. Verfahren nach einem der vorstehenden Gegenstände, wobei das anzufertigende Brillenglas gemäß einem Datensatz von Formranddaten virtuell auf dem Teil der Oberfläche eines Brillenglas-Rohlings bzw. auf dem Teil der optional beschichteten optisch wirksamen Zielfläche des Brillenglas-Halbfabrikats bzw. auf dem Teil einer der optional beschichteten optisch wirksamen Zielflächen des Brillenglas-Fertigfabrikats positioniert wird, welche jeweils keinen Defekt aufweist.
8. Verfahren nach einem der vorstehenden Gegenstände, wobei der Brillenglas-Rohling oder das Brillenglas-Halbfabrikat oder das Brillenglas-Fertigfabrikat gemäß einem Datensatz von Formranddaten und/oder gemäß einem Datensatz von Rezeptdaten auf einem Blockstück angeordnet wird.
9. Verfahren nach Gegenstand 8, wobei der Brillenglas-Rohling oder das Brillenglas-Halbfabrikat oder das Brillenglas-Fertigfabrikat gemäß einem Datensatz von Formranddaten und/oder einem Datensatz von Rezeptdaten dezentriert auf einem Blockstück angeordnet wird.
10. Computerprogrammprodukt zur Bereitstellung eines Brillenglases (10) aus einem Brillenglas-Rohling gemäß wenigstens einem vorgegebenen Datensatz von Rezeptdaten und gemäß wenigstens einem vorgegebenen Datensatz von Formranddaten, das auf einem computerlesbaren Medium gespeichert ist und Instruktionen aufweist, die betreibbar sind, um folgende Schritte durchzuführen:
   a. Bereitstellen eines Brillenglas-Rohlings,
   b. Identifikation und Erfassen der Position und/oder Größe wenigstens eines Defekts des Brillenglas-Rohlings,
   c. Empfangen wenigstens eines Datensatzes von Rezeptdaten,
   d. Empfangen wenigstens eines Datensatzes von Formranddaten,
   e. Vergleich des wenigstens Datensatzes von Rezeptdaten und Vergleich des wenigstens einen Datensatzes von Formranddaten, jeweils mit dem Brillenglas-Rohling umfassend wenigstens einen Defekt,
   f. Zuordnung des Brillenglas-Rohlings zu einer Kategorie oder aus einem Brillenglas-Halbfabrikat (20) bzw. Brillenglas-Fertigfabrikat (20) gemäß wenigstens einem vorgegebenen Datensatz von Formranddaten (30), das auf einem computerlesbaren Medium gespeichert ist und Instruktionen aufweist, die betreibbar sind, um folgende Schritte durchzuführen:
   g. Bereitstellen eines Brillenglas-Halbfabrikats (20) bzw. Brillenglas-Fertigfabrikats (20),
   h. Identifikation und Erfassen der Position und/oder der Größe wenigstens eines Defekts (99) des Brillenglas-Halbfabrikats (20) bzw. des Brillenglas-Fertigfabrikats (20),
   i. Empfangen wenigstens eines vorgegebenen Datensatzes von Formranddaten (30),
   j. Vergleich des wenigstens einen vorgegebenen Datensatzes von Formranddaten (30) mit dem Brillenglas-Halbfabrikat (20) bzw. Brillenglas-Fertigfabrikat (20), jeweils umfassend wenigstens einen Defekt,
   k. Zuordnung des Brillenglas-Halbfabrikats (20) bzw. des Brillenglas-Fertigfabrikats zu einer Kategorie.

### Bezugszeichenliste

- 10: Brillenglas
- 20: Brillenglas-Halbfabrikat oder Brillenglas-Fertigfabrikat
- 30: Datensatz von Formranddaten
- 35: Datensatz von Rezeptdaten
- 99: Defekt

## Patentansprüche

1. Verfahren zur Bereitstellung eines Brillenglas-Rohlings bzw. eines Brillenglas-Halbfabrikats für die Herstellung eines Brillenglases (10) gemäß wenigstens eines Datensatzes von Formranddaten, wobei das Verfahren die folgenden Schritte umfasst:
a. Bereitstellen eines Brillenglas-Rohlings,
b. Identifikation wenigstens eines optional vorhandenen Defekts des Brillenglas-Rohlings,
c. Erfassen der Position und optional der Größe des in Schritt b. identifizierten wenigstens einen Defekts,
d. Bereitstellen wenigstens eines Datensatzes von Formranddaten,
e. Vergleich des wenigstens einen Datensatzes von Formranddaten aus Schritt d. mit dem in Schritt b. identifizierten und dem in Schritt c. erfassten wenigstens einen Defekt des Brillenglas-Rohlings, umfassend ein Feststellen, ob der wenigstens eine Defekt in einem Bereich zu liegen kommt, der durch die Bearbeitung entsprechend des vorliegenden wenigstens einen Datensatzes von Formranddaten beim Formranden weggeschnitten wird,
f. Zuordnung des Brillenglas-Rohlings in Abhängigkeit des Vergleichs aus Schritt e. zu einer Kategorie unter Berücksichtigung der Position des wenigstens einen Defekts,
oder
g. Bereitstellen eines Brillenglas-Halbfabrikats (20), welches optional auf der optisch wirksamen Zielfläche beschichtet ist,
h. Identifikation wenigstens eines optional vorhandenen Defekts des Brillenglas-Halbfabrikats und/oder Identifikation wenigstens eines optional vorhandenen Defekts der optional vorhandenen Beschichtung der optisch wirksamen Zielfläche des Brillenglas-Halbfabrikats,
i. Erfassen der Position und optional der Größe des in Schritt h. identifizierten wenigstens einen Defekts,
j. Bereitstellen wenigstens eines Datensatzes von Formranddaten,
k. Vergleich des wenigstens einen Datensatzes von Formranddaten aus Schritt j. mit dem in Schritt h. identifizierten und dem in Schritt i. erfassten wenigstens einen Defekt des Brillenglas-Halbfabrikats, umfassend ein Feststellen, ob der wenigstens eine Defekt in einem Bereich zu liegen kommt, der durch die Bearbeitung entsprechend des vorliegenden wenigstens einen Datensatzes von Formranddaten beim Formranden weggeschnitten wird;
l. Zuordnung des Brillenglas-Halbfabrikats in Abhängigkeit des Vergleichs aus Schritt k. zu einer Kategorie unter Berücksichtigung der Position des wenigstens einen Defekts;
wobei der wenigstens eine Datensatz von Formranddaten abstrakt ist und solche Formranddaten beinhaltet, bei denen Bereiche definiert wurden, die mit einer bestimmten Wahrscheinlichkeit beim Formranden abgetrennt werden.

2. Verfahren gemäß Anspruch 1, wobei der abstrakte Datensatz von Formranddaten derart festgelegt ist, dass wenigstens 47%, weiter bevorzugt wenigstens 54%, besonders bevorzugt wenigstens 66% und ganz besonders bevorzugt wenigstens 71% der Halbfabrikate bzw. der Brillenglas-Fertigfabrikate zur Herstellung eines fertigen, formgerandeten Brillenglases herangezogen werden können.

3. Verfahren nach einem der vorstehenden Ansprüche, wobei das anzufertigende Brillenglas gemäß einem Datensatz von Formranddaten virtuell auf dem Teil der Oberfläche eines Brillenglas-Rohlings bzw. auf dem Teil der optional beschichteten optisch wirksamen Zielfläche des Brillenglas-Halbfabrikats positioniert wird, welche jeweils keinen Defekt aufweist.

4. Verfahren gemäß einem der vorhergehenden Ansprüche, wobei bei einer Zuordnung in eine derartige Kategorie, gemäß welcher der Brillenglas-Rohling bzw. das Brillenglas-Halbfabrikat gemäß dem abstrakten Datensatz von Formranddaten weiterverarbeitet werden kann, eine Zuordnung des Brillenglas-Rohlings, des Brillenglas-Halbfabrikats bzw. des Brillenglas-Fertigfabrikats zu einem Zwischenlagerbestand erfolgt.

5. Verfahren nach einem der vorstehenden Ansprüche, wobei der Brillenglas-Rohling bzw. das Brillenglas-Halbfabrikat einer der nachstehenden Kategorien zugeordnet wird:
a) Kategorie 1, gemäß der der Brillenglas-Rohling bzw. das Brillenglas-Halbfabrikat mit wenigstens einem identifizierten und positionsbestimmten Defekt gemäß wenigstens einem konkreten Datensatz von Rezeptdaten und/oder gemäß wenigstens einem konkreten Datensatz von Formranddaten weiterverarbeitet wird, oder
b) Kategorie 3, gemäß der der Brillenglas-Rohling bzw. das Brillenglas-Halbfabrikat mit wenigstens einem identifiziertem und positionsbestimmtem Defekt gemäß wenigstens einem abstrakten Datensatz von Formranddaten in einen Zwischenlagerbestand aufgenommen wird, oder
c) Kategorie 4, gemäß der der Brillenglas-Rohling bzw. das Brillenglas-Halbfabrikat mit wenigstens einem identifizierten und positionsbestimmten Defekt verworfen wird.

6. Verfahren nach einem der vorstehenden Ansprüche, ferner umfassend ein Bestimmen der Position des wenigstens einen Defekts anhand eines durch einen DataMatrix-Code festgelegten Koordinatensystems und/oder anhand des geometrischen Mittelpunktes des Brillenglas-Rohlings bzw. Brillenglas-Halbfabrikats und eines weiteren, vorab definierten Bezugspunkts einer Markierung.

7. Verfahren gemäß Anspruch 6, wobei der DataMatrix-Code geschlossene Kanten aufweist und das Koordinatensystem durch die geschlossenen Kanten aufgespannt wird.

8. Verfahren zur Bestimmung einer Position wenigstens eines Defekts eines Brillenglas-Rohlings oder eines Brillenglas-Halbfabrikats, wobei das Verfahren die folgenden Schritte umfasst:
a. Bereitstellen eines Brillenglas-Rohlings,
b. Identifikation wenigstens eines optional vorhandenen Defekts des Brillenglas-Rohlings,
c. Erfassen der Position und optional der Größe des in Schritt b. identifizierten wenigstens einen Defekts und Bestimmen der Position des wenigstens einen Defekts anhand eines durch einen DataMatrix-Code festgelegten Koordinatensystems und/oder anhand des geometrischen Mittelpunktes des Brillenglas-Rohlings und eines weiteren, vorab definierten Bezugspunkts einer Markierung,
oder
d. Bereitstellen eines Brillenglas-Halbfabrikats (20), welches optional auf der optisch wirksamen Zielfläche beschichtet ist,
e. Identifikation wenigstens eines optional vorhandenen Defekts des Brillenglas-Halbfabrikats und/oder Identifikation wenigstens eines optional vorhandenen Defekts der optional vorhandenen Beschichtung der optisch wirksamen Zielfläche des Brillenglas-Halbfabrikats,
f. Erfassen der Position und optional der Größe des in Schritt e. identifizierten wenigstens einen Defekts und Bestimmen der Position des wenigstens einen Defekts anhand eines durch den DataMatrix-Code festgelegten Koordinatensystems und/oder anhand des geometrischen Mittelpunktes des Brillenglas-Halbfabrikats und eines weiteren, vorab definierten Bezugspunkts einer Markierung,
oder
g. Bereitstellen eines Brillenglas-Fertigfabrikats (20), welches optional auf wenigstens einer der optisch wirksamen Zielflächen beschichtet ist,
h. Identifikation wenigstens eines optional vorhandenen Defekts des Brillenglas-Fertigfabrikats und/oder Identifikation wenigstens eines optional vorhandenen Defekts der optional vorhandenen Beschichtung wenigstens einer der optisch wirksamen Zielflächen des Brillenglas-Fertigfabrikats,
i. Erfassen der Position und optional der Größe des in Schritt h. identifizierten wenigstens einen Defekts und Bestimmen der Position des wenigstens einen Defekts anhand eines durch den DataMatrix-Code festgelegten Koordinatensystems und/oder anhand des geometrischen Mittelpunktes des Brillenglas-Fertigfabrikats und eines weiteren, vorab definierten Bezugspunkts einer Markierung.

9. Verfahren gemäß Anspruch 8, wobei der DataMatrix-Code geschlossene Kanten aufweist und das Koordinatensystem durch die geschlossenen Kanten augespannt wird.

10. Verfahren gemäß Anspruch 8 oder 9, wobei die Markierung als ein 2D-Barcode und optional als DataMatrix-Code ausgebildet ist.

11. Verfahren gemäß einem der Ansprüche 8 bis 10, wobei die Markierung durch Abgießen, Anzeichnen, Aufdrucken, Gravieren und/oder Ritzen auf eine optisch wirksame Zielfläche und/oder auf die der optisch wirksamen Zielfläche gegenüberliegenden Fläche des Brillenglas-Halbfabrikats bzw. auf eine optisch wirksame Zielfläche des Brillenglas-Fertigfabrikats aufgebracht ist.

12. Verfahren gemäß einem der Ansprüche 8 bis 11, ferner umfassend ein Bereitstellen wenigstens eines Datensatzes von Formranddaten, und ein Vergleichen des wenigstens einen Datensatzes von Formranddaten mit dem erfassten wenigstens einen Defekt des Brillenglas-Rohlings bzw. Brillenglas-Halbfabrikats bzw. Brillenglas-Fertigfabrikats, umfassend ein Feststellen, ob der wenigstens eine Defekt in einem Bereich zu liegen kommt oder sich in dem Bereich virtuell positionieren lässt, der durch die Bearbeitung entsprechend des vorliegenden wenigstens einen Datensatzes von Formranddaten beim Formranden weggeschnitten wird.

13. Verfahren gemäß Anspruch 12, wobei der wenigstens eine Datensatz von Formranddaten abstrakt ist und solche Formranddaten beinhaltet, bei denen Bereiche definiert wurden, die mit einer bestimmten Wahrscheinlichkeit beim Formranden abgetrennt werden.

14. Verfahren gemäß einem der Ansrpüche 12 und 13, ferner umfassend eine Zuordnung des Brillenglas-Rohlings bzw. des Brillenglas-Halbfabrikats bzw. des Brillenglas-Fertigfabrikats zu einer Kategorie, wobei gemäß einer Kategorie das Brillenglas-Halbfabrikat bzw. das Brillenglas-Fertigfabrikat mit jeweils wenigstens einem, jeweils identifiziertem und jeweils positionsbestimmtem Defekt gemäß wenigstens einem abstrakten Datensatz von Formranddaten in einen Zwischenlagerbestand aufgenommen wird.

15. Computerprogrammprodukt zur Bereitstellung eines Brillenglas-Rohlings bzw. eines Brillenglas-Halbfabrikats für die Herstellung eines Brillenglases, das auf einem computerlesbaren Medium gespeichert ist und Instruktionen aufweist, die betreibbar sind, um ein Verfahren gemäß einem der vorhergehenden Verfahren durchzuführen.
